(19) Europäisches Patentamt / European Patent Office / Office européen des brevets

(11) **EP 1 678 014 B1**

(12) # EUROPÄISCHE PATENTSCHRIFT

(45) Veröffentlichungstag und Bekanntmachung des Hinweises auf die Patenterteilung:
**04.04.2012 Patentblatt 2012/14**

(21) Anmeldenummer: **04790397.6**

(22) Anmeldetag: **14.10.2004**

(51) Int Cl.:
***B60R 21/01*** *(2006.01)* ***B60R 21/0134*** *(2006.01)*

(86) Internationale Anmeldenummer:
**PCT/EP2004/011538**

(87) Internationale Veröffentlichungsnummer:
**WO 2005/035320 (21.04.2005 Gazette 2005/16)**

(54) **FUSSGÄNGERSCHUTZSYSTEM FÜR EIN KRAFTFAHRZEUG**

PEDESTRIAN PROTECTION SYSTEM FOR A MOTOR VEHICLE

SYSTEME DE PROTECTION DE PIETONS, POUR AUTOMOBILE

(84) Benannte Vertragsstaaten:
**AT BE BG CH CY CZ DE DK EE ES FI FR GB GR HU IE IT LI LU MC NL PL PT RO SE SI SK TR**

(30) Priorität: **17.10.2003 DE 10348997**
**17.10.2003 DE 10348998**
**17.10.2003 DE 10348999**
**31.01.2004 DE 102004004951**

(43) Veröffentlichungstag der Anmeldung:
**12.07.2006 Patentblatt 2006/28**

(73) Patentinhaber:
- **Volkswagen Aktiengesellschaft**
  **38436 Wolfsburg (DE)**
- **AUDI AG**
  **85045 Ingolstadt (DE)**
- **Andata Entwicklungstechnologie GmbH & Co. KG**
  **5400 Hallein (AT)**

(72) Erfinder:
- **KUHN, Andreas**
  **A-5440 Kochl (AT)**
- **NEUBOHN, André**
  **38440 Wolfsburg (DE)**
- **WEISS, Christian**
  **85113 Böhmfeld (DE)**

(74) Vertreter: **Geske, Kerstin**
**Volkswagen AG,**
**Patentabteilung EZP,**
**Postfach 1770**
**38436 Wolfsburg (DE)**

(56) Entgegenhaltungen:
**WO-A1-03/082639**
**DE-A- 10 016 142**
**DE-A1- 19 854 380**
**US-A1- 2002 043 417**
**US-A1- 2002 147 533**
**US-A1- 2003 155 753**
**US-B1- 6 219 606**
**US-B1- 6 561 301**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 678 014 B1

Printed by Jouve, 75001 PARIS (FR)

## Beschreibung

Die Erfindung betrifft ein Fußgängerschutzsystem für ein Kraftfahrzeug mit einem Aufprallerkennungssensor zur Erkennung eines Aufpralls eines Fußgängers auf das Kraftfahrzeug.

Fußgängerschutzsysteme sind z.B. aus der EP 0 914 992 A1 und der DE 100 16 142 A1 sowie aus dem in der DE 100 16 142 A1 diskutierten Stand der Technik bekannt. So offenbart die DE 100 16 142 A1 ein Personenschutzsystem mit einem Auslöseschalter, wobei der Auslöseschalter ein erstes Kontaktpaar und mindestens ein zweites Kontaktpaar aufweist, welches durch Druck betätigbar ist und mittels dessen ein Stromkreis geschlossen und dadurch ein Kontaktsignal erzeugt werden kann, wobei das erste und das zweite Kontaktpaar in einem räumlichen Abstand voneinander angeordnet sind.

Ein gattungsgemäßes Fußgängerschutzsystem ist aus der US-A-2002/43417 bekannt, wobei in Abhängigkeit einer gemessenen Zeit, in welcher eine bestimmte Verformung des Stoßfängers stattfindet, ein Zündsignal zum Anheben einer Motorhaube ausgelöst wird.

Es ist Aufgabe der Erfindung, ein verbessertes Fußgängerschutzsystem anzugeben. Dabei ist es wünschenswert, einen besonders guten Kompromiss zwischen geringer Fehlauslösung des Fußgängerschutzsystems, sicherer Auslösung des Fußgängerschutzsystems bei einem Aufprall eines Fußgängers auf das Kraftfahrzeug und schneller Auslösung des Fußgängerschutzsystems bei einem Aufprall eines Fußgängers auf das Kraftfahrzeug zu finden.

Vorgenannte Aufgabe wird durch ein Fußgängerschutzsystem für ein Kraftfahrzeug mit zumindest einem Aufprallerkennungssensor zur Erkennung eines Aufpralls eines Fußgängers auf das Kraftfahrzeug gelöst, wobei das Fußgängerschutzsystem einen mittels eines Zündsignals steuerbaren Aktor zum Anheben einer Motorhaube des Kraftfahrzeuges umfasst, und wobei das Fußgängerschutzsystem ein Steuergerät zur Ermittlung des Zündsignals in Abhängigkeit eines zeitlichen Mittelwertes einer mittels des Aufprallerkennungssensors gemessenen Größe über zumindest ein erstes Zeitintervall umfasst.

Ein zeitlicher Mittelwert im Sinne der Erfindung kann ein arithmetischer Mittelwert oder ein gewichteter Mittelwert sein. Bei einem derartigen gewichteten Mittelwert können z.B. jüngere Werte der zu mittelnden Größe in dem betreffenden Zeitintervall stärker gewichtet werden als ältere Werte der zu mittelnden Größe in dem betreffenden Zeitintervall. Ein Mittelwert im Sinne der Erfindung kann auch ein einem Mittelwert proportionaler Wert sein. In vorteilhafter Ausgestaltung der Erfindung ist der Mittelwert ein dem arithmetischen Mittelwert proportionaler Wert. Dabei ist der Mittelwert vorteilhafterweise ein dem Integral der zu mittelnden Größe in dem betreffenden Zeitintervall bzw. der Summe von Abtastwerten der zu mittelnden Größe in dem betreffenden Zeitintervall proportionaler Wert.

Ein Aufprallerkennungssensor im Sinne der Erfindung kann ein Sensor zur Messung einer Deformation des Kraftfahrzeuges sein. Ein solcher Sensor kann ein faseroptischer Sensor oder ein in der DE 100 16 142 A1 offenbarter Sensor sein. Einen faseroptischen Sensor offenbart. z.B. der Artikel "Ein faser-optisches Sensorsystem für die Ansteuerung aktiver Systeme zum Fußgängerschutz" von O. Scherf und R. Bardini. Ein Aufprallerkennungssensor im Sinne der Erfindung kann auch ein Beschleunigungssensor zum Messen einer Beschleunigung in eine oder mehrere Richtungen sein. Auch berührungslos arbeitende Sensoren wie Infrarotsensoren, Radargeräte, Laserscanner oder Kameras sind für sich oder in Kombination mit vorgenannten Sensoren einsetzbar.

In vorteilhafter Ausgestaltung der Erfindung ist das Zündsignal mittels des Steuergerätes in Abhängigkeit eines zeitlichen Mittelwertes der mittels des Aufprallerkennungssensors gemessenen Größe über ein zweites, von dem ersten Zeitintervall verschiedenes, Zeitintervall ermittelbar.

In weiterhin vorteilhafter Ausgestaltung der Erfindung ist das Zündsignal mittels des Steuergerätes in Abhängigkeit zeitlicher Mittelwerte der mittels des Aufprallerkennungssensors gemessenen Größe in zwei bis zwanzig, insbesondere zwei bis fünf, unterschiedlichen Zeitintervallen ermittelbar.

In weiterhin vorteilhafter Ausgestaltung der Erfindung sind die Zeitintervalle zwischen 1 ms und 200 ms lang.

In einer Ausgestaltung der Erfindung sind die Zeitintervalle im wesentlichen gleich lang.

In weiterhin vorteilhafter Ausgestaltung der Erfindung sind das erste Zeitintervall und/oder das zweite Zeitintervall zwischen 1 ms und 50 ms, vorteilhafterweise 2 ms und 16 ms, voneinander versetzt. In weiterhin vorteilhafter Ausgestaltung der Erfindung sind zumindest zwei Zeitintervalle zwischen 1 ms und 50 ms, vorteilhafterweise 2 ms und 16 ms, versetzt.

In weiterhin vorteilhafter Ausgestaltung der Erfindung ist das erste Zeitintervall und/oder das zweite Zeitintervall zwischen 1 ms und 200 ms, insbesondere zwischen 4 ms und 32 ms, vorteilhafterweise zwischen 8 ms und 24 ms, lang.

Vorgenannte Aufgabe wird zudem durch ein Verfahren zum Herstellen eines Kraftfahrzeuges, insbesondere eines Kraftfahrzeuges mit einem Fußgängerschutzsystem mit einem oder mehreren der vorhergehenden Merkmale, gelöst, wobei zumindest ein Aufprallerkennungssensor zur Erkennung eines Aufpralls eines Fußgängers auf das Kraftfahrzeug, ein Steuergerät zur Ermittlung eines Zündsignals in Abhängigkeit eines Vergleichs einer mittels des Aufprallerkennungssensors gemessenen Größe oder eines zeitlichen Mittelwertes der mittels des Aufprallerkennungssensors gemessenen Größe mit zumindest einem Grenzwert und ein mittels des Zündsignals steuerbarer Aktor zum Anheben einer Motorhaube des Kraftfahrzeuges in dem Kraftfahrzeug angeordnet werden, und wobei der Grenzwert automatisch ermittelt wird.

Vorgenannte Aufgabe wird zudem durch ein Verfahren zum Herstellen eines Kraftfahrzeuges, insbesondere eines Kraftfahrzeuges mit einem Fußgängerschutzsystem mit einem oder mehreren der vorhergehenden Merkmale, gelöst, wobei zumindest ein Aufprallerkennungssensor zur Erkennung eines Aufpralls eines Fußgängers auf das Kraftfahrzeug, ein Steuergerät zur Ermittlung eines Zündsignale in Abhängigkeit einer Mehrzahl von Vergleichen einer mittels des Aufprallerkennungssensors gemessenen Größe oder zeitlicher Mittelwerte der mittels des Aufprallerkennungssensors gemessenen Größen mit einer Mehrzahl von Grenzwerten und ein mittels des Zündsignals steuerbarer Aktor zum Anheben einer Motorhaube des Kraftfahrzeuges in dem Kraftfahrzeug angeordnet werden, und wobei die Grenzwerte, die Anzahl der mittels des Aufprallerkennungssensors gemessenen Größen oder deren Mittelwerte für die Vergleiche automatisch ermittelt werden.

In vorteilhafter Ausgestaltung der Erfindung werden die Grenzwerte, die Anzahl der Vergleiche, die Reihenfolge der Vergleiche und/oder das Alter der mittels des Aufprallerkennungssensors gemessenen Größen oder deren Mittelwerte für die Vergleiche automatisch ermittelt.

In weiterhin vorteilhafter Ausgestaltung der Erfindung werden zumindest zwei Aufprall-erkennungssensoren je zur Erkennung eines Aufpralls eines Fußgängers auf das Kraftfahrzeug in dem Kraftfahrzeug angeordnet, wobei die mittels der Aufprallerkennungssensoren gemessenen Größen oder deren Mittelwerte für die Vergleiche automatisch ausgewählt werden.

Vorgenannte Aufgabe wird zudem durch ein Verfahren zur Erzeugung eines Auslösezusammenhanges zum Auslösen eines, insbesondere zum Anheben einer Motorhaube eines Kraftfahrzeuges geeigneten, Aktors eines Fußgängerschutzsystems, insbesondere eines Fußgängerschutzsystems mit einem oder mehreren der vorhergehenden Merkmale, des Kraftfahrzeuges in Abhängigkeit einer mittels eines Aufprallerkennungssensors zur Erkennung eines Aufpralls eines Fußgängers auf das Kraftfahrzeug gemessenen Größe oder eines zeitlichen Mittelwertes der mittels des Aufprallerkennungssensors gemessenen Größe gelöst, wobei der Auslösezusammenhang in Abhängigkeit der mittels des Aufprallerkennungssensors gemessenen Größe oder des zeitlichen Mittelwertes der mittels des Aufprallerkennungssensors gemessenen Größe einer Situation erzeugt wird, für die ein Soll-Auslösezeitpunkt des Aktors bekannt ist, wobei die mittels des Aufprallerkennungssensors gemessene Größe oder der zeitliche Mittelwert der mittels des Aufprallerkennungssensors gemessenen Größe jedoch in einem Trainingsunterdrückungs-Zeitintervall vor dem Soll-Auslösezeitpunkt des Aktors, um den Soll-Auslösezeitpunkt des Aktors herum oder nach dem Soll-Auslösezeitpunkt des Aktors bei der Erzeugung des Auslösezusammenhanges unberücksichtigt bleibt.

Eine Situation, für die ein Soll-Auslösezeitpunkt des Aktors zum Anheben der Motorhaube bekannt ist, ist im Sinne der Erfindung insbesondere ein Crashtest. Dabei werden vorteilhafterweise sowohl Crashtests, die Situationen nachbilden, in denen ein Aktor auslösen soll, als auch Crashtests durchgeführt, die Situationen nachbilden, in denen ein Aktor nicht auslösen soll.

In vorteilhafter Ausgestaltung der Erfindung bleibt die mittels des Aufprallerkennungssensors gemessene Größe oder der zeitliche Mittelwert der mittels des Aufprallerkennungssensors gemessenen Größe in einem Trainingsunterdrückungs-Zeitintervall vor dem Soll-Auslösezeitpunkt des Aktors bei der Erzeugung des Auslösezusammenhanges unberücksichtigt.

Vorgenannte Aufgabe wird zudem durch ein Verfahren zur Erzeugung eines Auslösezusammenhanges zum Auslösen eines, insbesondere zum Anheben einer Motorhaube eines Kraftfahrzeuges geeigneten, Aktors eines Fußgängerschutzsystems, insbesondere eines Fußgängerschutzsystems mit einem oder mehreren der vorhergehenden Merkmale, des Kraftfahrzeuges in Abhängigkeit einer mittels eines Aufprallerkennungssensors zur Erkennung eines Aufpralls eines Fußgängers auf das Kraftfahrzeug gemessenen Größe oder eines zeitlichen Mittelwertes der mittels des Aufprallerkennnungssensors gemessenen Größe gelöst, wobei der Auslösezusammenhang

- in Abhängigkeit der gemessenen Größe oder des zeitlichen Mittelwertes der gemessenen Größe einer Situation, für die ein Soll-Auslösezeitpunkt des Aktors bekannt ist, und
- in Abhängigkeit eines Soll-Zündsignals zur Angabe des Soll-Auslösezeitpunktes

erzeugt wird, und wobei das Soll-Zündsignal bei der Erzeugung des Auslösezusammenhanges in einem Sondertrainings-Zeitintervall vor dem Soll-Auslösezeitpunkt des Aktors, um den Soll-Auslösezeitpunkt des Aktors herum oder nach dem Soll-Auslösezeitpunkt des Aktors durch einen Sondertrainings-Wert ersetzt wird.

In vorteilhafter Ausgestaltung der Erfindung wird das Soll-Zündsignal bei der Erzeugung des Auslösezusammenhanges in dem Sondertrainings-Zeitintervall vor dem Soll-Auslösezeitpunkt des Aktors durch den Sondertrainings-Wert ersetzt.

In weiterhin vorteilhafter Ausgestaltung der Erfindung liegt der Sondertrainings-Wert zwischen einem Wert des Soll-Zündsignals vor dem Soll-Auslösezeitpunkt und einem Wert des Soll-Zündsignals nach dem Soll-Auslösezeitpunkt.

In weiterhin vorteilhafter Ausgestaltung der Erfindung ist der Sondertrainings-Wert zeitvariant.

In weiterhin vorteilhafter Ausgestaltung der Erfindung ist das Trainingsunterdrückungs-Zeitintervall oder das Sondertrainings-Zeitintervall zwischen 1 ms und 40 ms, insbesondere 2 ms und 10 ms, vorteilhafterweise in etwa 5 ms, lang.

Vorgenannte Aufgabe wird zudem durch ein Verfahren zum Herstellen eines Kraftfahrzeuges, insbesondere mit einem oder mehreren der vorhergehenden Merkmale, gelöst, wobei ein erster Auslösezusammenhang zur Erzeugung eines ersten, von einer mittels eines ersten Aufprallerkennungssensors zur Erkennung eines Aufpralls eines Fußgängers auf das Kraftfahrzeug messbaren Größe abhängigen und zur Ansteuerung eines Aktors zum Anheben einer Motorhaube des Kraftfahrzeuges geeigneten, Zündsignals in Abhängigkeit

- eines Soll-Zündsignals zur Ansteuerung des Aktors und
- einer mittels des ersten Aufprallerkennungssensors in einer Situation mit bekanntem Soll-Zündsignal gemessenen Größe generiert wird, und wobei zumindest ein zweiter Auslösezusammenhang zur Erzeugung eines zweiten, von einer mittels eines zweiten, von dem ersten Aufprallerkennungssensor verschiedenen, Aufprallerkennungssensor zur Erkennung eines Aufpralls eines Fußgängers auf das Kraftfahrzeug messbaren Größe abhängigen und zur Ansteuerung des Aktors geeigneten, Zündsignals in Abhängigkeit
- des Soll-Zündsignals und
- einer mittels des zweiten Aufprallerkennungssensors in der oder einer weiteren Situation mit bekanntem Soll-Zündsignal gemessenen Größe

generiert wird.

In vorteilhafter Ausgestaltung der Erfindung wird der erste Aufprallerkennungssensor oder der zweite Aufprallerkennungssensor in Abhängigkeit des ersten Zündsignals, des zweiten Zündsignals_oder des Soll-Zündsignals_zum Einbau in das Kraftfahrzeug ausgewählt.

In weiterhin vorteilhafter Ausgestaltung der Erfindung wird der erste Aufprallerkennungssensor oder der zweite Aufprallerkennungssensor in Abhängigkeit des ersten Zündsignals, des zweiten Zündsignals und des Soll-Zündsignals zum Einbau in das Kraftfahrzeug ausgewählt.

In weiterhin vorteilhafter Ausgestaltung der Erfindung wird der erste Aufprallerkennungssensor oder der zweite Aufprallerkennungssensor in Abhängigkeit einer Abweichung des ersten Zündsignals von dem Soll-Zündsignal und/ oder einer Abweichung des zweiten Zündsignals von dem Soll-Zündsignal zum Einbau in das Kraftfahrzeug ausgewählt.

In weiterhin vorteilhafter Ausgestaltung der Erfindung werden der Aktor und der ausgewählte Aufprallerkennungssensor in das Kraftfahrzeug eingebaut.

In weiterhin vorteilhafter Ausgestaltung der Erfindung wird der dem ausgewählten Aufprallerkennungssensor zugeordnete Auslösezusammenhang in dem Kraftfahrzeug implementiert.

Vorgenannte Aufgabe wird zudem durch ein Fußgängerschutzsystem, insbesondere durch ein Fußgängerschutzsystem mit einem oder mehreren der vorhergehenden Merkmale, für ein Kraftfahrzeug, insbesondere eines Kraftfahrzeuges mit einem oder mehreren der vorhergehenden Merkmale, mit zumindest einem Aufprallerkennungssensor zur Erkennung eines Aufpralls eines Fußgängers auf das Kraftfahrzeug, wobei das Fußgängerschutzsystem einen mittels eines Zündsignals steuerbaren Aktor zum Anheben einer Motorhaube des Kraftfahrzeuges umfasst gelöst, wobei das Fußgängerschutzsystem ein neuronales Netz zur Ermittlung des Zündsignals in Abhängigkeit einer mittels des Aufprallerkennungssensors gemessenen Größe oder eines zeitlichen Mittelwertes der mittels des Aufprallerkennungssensors gemessenen Größe über zumindest ein erstes Zeitintervall umfasst.

Eine weitere Erfindung betrifft ein Kraftfahrzeug mit zumindest einem Sensor zur Erkennung eines Einflusses auf das Kraftfahrzeug, wie eine Beschädigung, eine Sitzbelegung oder eine Annäherung, wobei das Kraftfahrzeug einen mittels eines Steuersignals steuerbaren Aktor umfasst, und wobei das Kraftfahrzeug ein Steuergerät zur Ermittlung des Steuersignals in Abhängigkeit eines zeitlichen Mittelwertes einer mittels des Sensors gemessenen Größe über zumindest ein erstes Zeitintervall umfasst. Vorteilhafte Ausgestaltungen dieser Erfindung ergeben sich sinngemäß aus den Ansprüchen 2 bis 8, wobei ein Aufprallerkennungssensor ein Sensor und ein Zündsignal ein Steuersignal ist.

Eine weitere Erfindung betrifft ein Verfahren zum Herstellen eines Kraftfahrzeuges, insbesondere eines vorgenannten Kraftfahrzeuges, wobei zumindest ein Sensor zur Erkennung eines Einflusses auf das Kraftfahrzeug, wie eine Beschädigung, eine Sitzbelegung oder eine Annäherung, ein Steuergerät zur Ermittlung eines Steuersignals in Abhängigkeit eines Vergleichs einer mittels des Sensors gemessenen Größe oder eines zeitlichen Mittelwertes der mittels des Sensors gemessenen Größe mit zumindest einem Grenzwert und ein mittels des Steuersignals steuerbarer Aktor in dem Kraftfahrzeug angeordnet werden, und wobei der Grenzwert automatisch ermittelt wird.

Eine weitere Erfindung betrifft ein Verfahren zum Herstellen eines Kraftfahrzeuges, insbesondere eines vorgenannten Kraftfahrzeuges, wobei zumindest ein Sensor zur Erkennung eines Einflusses auf das Kraftfahrzeug, wie eine Beschädigung, eine Sitzbelegung oder eine Annäherung, ein Steuergerät zur Ermittlung eines Steuersignals in Abhängigkeit einer Mehrzahl von Vergleichen einer mittels des Sensors gemessenen Größe oder zeitlicher Mittelwerte der mittels des Sensors gemessenen Größen mit einer Mehrzahl von Grenzwerten und ein mittels des Steuersignals steuerbarer Aktor in dem Kraftfahrzeug angeordnet werden, und wobei die Grenzwerte, die Anzahl der mittels des Sensors gemessenen Größen oder deren Mittelwerte für die Vergleiche automatisch ermittelt werden. Vorteilhafte Ausgestaltungen dieser Erfindung ergeben sich sinngemäß aus den Ansprüchen 11 und 12, wobei ein Aufprallerkennungssensor ein Sensor und ein Zündsignal ein Steuersignal ist.

Eine weitere Erfindung betrifft ein Verfahren zur Erzeugung eines Auslösezusammenhanges zum Auslösen eines Aktors eines Kraftfahrzeuges, insbesondere eines vorgenannten Kraftfahrzeuges, in Abhängigkeit einer mittels eines Sensors zur Erkennung eine Einflusses auf das Kraftfahrzeug, wie eine Beschädigung, eine Sitzbelegung oder eine Annäherung, gemessenen Größe oder eines zeitlichen Mittelwertes der mittels des Sensors gemessenen Größe, wobei der Auslösezusammenhang in Abhängigkeit der mittels des Sensors gemessenen Größe oder des zeitlichen Mittelwertes der mittels des Sensors gemessenen Größe einer Situation erzeugt wird, für die ein Soll-Auslösezeitpunkt des Aktors bekannt ist, wobei die mittels des Sensors gemessene Größe oder der zeitliche Mittelwert der mittels des Sensors gemessenen Größe jedoch in einem Trainingsunterdrückungs-Zeitintervall vor dem Soll-Auslösezeitpunkt des Aktors, um den Soll-Auslösezeitpunkt des Aktors herum oder nach dem Söll-Auslösezeitpunkt des Aktors bei der Erzeugung des Auslösezusammenhanges unberücksichtigt bleibt. Vorteilhafte Ausgestaltungen dieser Erfindung ergeben sich sinngemäß aus den Ansprüchen 14, 19, 20 oder 21, wobei ein Aufprallerkennungssensor ein Sensor und ein Zündsignal ein Steuersignal ist.

Eine weitere Erfindung betrifft ein Verfahren zur Erzeugung eines Auslösezusammenhanges zum Auslösen eines Aktors eines Kraftfahrzeuges, insbesondere eines vorgenannten Kraftfahrzeuges, in Abhängigkeit einer mittels eines Sensors zur Erkennung eines Einflusses auf das Kraftfahrzeug, wie eine Beschädigung, eine Sitzbelegung oder eine Annäherung, gemessenen Größe oder eines zeitlichen Mittelwertes der mittels des Sensors gemessenen Größe, wobei der Auslösezusammenhang

- in Abhängigkeit der gemessenen Größe oder des zeitlichen Mittelwertes der gemessenen Größe einer Situation, für die ein Soll-Auslösezeitpunkt das Aktors bekannt ist, und
- in Abhängigkeit eines Soll-Steuersignals zur Angabe des Soll-Auslösezeitpunktes erzeugt wird, und wobei das Soll-Steuersignal bei der Erzeugung des Auslösezusammenhanges in einem Sondertrainings-Zeitintervall vor dem Soll-Auslösezeitpunkt des Aktors, um den Soll-Auslösezeitpunkt des Aktors herum oder nach dem Soll-Auslösezeitpunkt des Aktors durch einen Sondertrainings-Wert ersetzt wird. Vorteilhafte Ausgestaltungen dieser Erfindung ergeben sich sinngemäß aus den Ansprüchen 16 bis 21, wobei ein Aufprallerkennungssensor ein Sensor und ein Zündsignal ein Steuersignal ist.

Eine weitere Erfindung betrifft ein Verfahren zum Herstellen eines Kraftfahrzeuges, insbesondere eines vorgenannten Kraftfahrzeuges, wobei ein erster Auslösezusammenhang, zur Erzeugung eines ersten, von einer mittels eines ersten Sensors zur Erkennung eines Einflusses auf das Kraftfahrzeug, wie eine Beschädigung, eine Sitzbelegung oder eine Annäherung, messbaren Größe abhängigen und zur Ansteuerung eines Aktors des Kraftfahrzeuges geeigneten, Steuersignals in Abhängigkeit

- eines Soll-Steuersignals zur Ansteuerung des Aktors und
- einer mittels des ersten Sensors in einer Situation mit bekanntem Soll-Steuersignal gemessenen Größe

generiert wird, und wobei zumindest ein zweiter Auslösezusammenhang zur Erzeugung eines zweiten, von einer mittels eines zweiten, von dem ersten Sensor verschiedenen, Sensors zur Erkennung eines Einflusses auf das Kraftfahrzeug, wie eine Beschädigung, eine Sitzbelegung oder eine Annäherung, messbaren Größe abhängigen und zur Ansteuerung des Aktors geeigneten, Steuersignals in Abhängigkeit

- des Soll-Steuersignals und
- einer mittels des zweiten Sensors in der oder einer weiteren Situation mit bekanntem Soll-Steuersignal gemessenen Größe

generiert wird Vorteilhafte Ausgestaltungen dieser Erfindung ergeben sich sinngemäß aus den Ansprüchen 24 bis 28, wobei ein Aufprallerkennungssensor ein Sensor und ein Zündsignal ein Steuersignal ist.

Kraftfahrzeug im Sinne der Erfindung ist insbesondere ein individuell im Straßenverkehr benutzbares Landfahrzeug Kraftfahrzeuge im Sinne der Erfindung sind insbesondere nicht auf Landfahrzeug mit Verbrennungsmotor beschränkt.

Weitere Vorteile und Einzelheiten ergeben sich aus der nachfolgenden Beschreibung von Ausführungsbeispielen, wobei gleiche Bezugszeichen gleiche oder gleichartige Gegenstände bezeichnen. Dabei zeigen:

Fig. 1 ein Ausführungsbeispiel eines Kraftfahrzeuges, Fig. 2 einen Querschnitt durch einen Bereich des Kraftfahrzeuges-gemäß Fig. 1,

Fig. 3 das Kraftfahrzeug gemäß Fig. 1 in einer Frontansicht,
Fig. 4 ein Ausführungsbeispiel für ein Fußgängerschutzsystem,
Fig. 5 ein Ausführungsbeispiel eines Steuergerätes,
Fig. 6 ein Ausführungsbeispiel eines Auslösemoduls,
Fig. 7 ein Ausführungsbeispiel eines Ausgangssignals eines Aufprallerkennungssensors,
Fig. 8 das Integral des Ausgangssignals gemäß Fig. 7 in einem Zeitintervall,
Fig. 9 ein Ausführungsbeispiel eines neuronalen Netzes,
Fig. 10 ein Ausführungsbeispiel eines Entscheidungsbaumes,
Fig. 11 ein Ausführungsbeispiel eines Verfahrens zum Herstellen eines Kraftfahrzeuges,
Fig. 12 das Integral gemäß Fig. 8 mit einem Trainingsunterdrückungs-Zeitintervall,
Fig. 13 einen Ausschnitt des Integrals gemäß Fig. 12,
Fig. 14 eine Auslöseinformation mit einem Trainingsunterdrückungs-Zeitintervall,
Fig. 15 einen Ausschnitt des Integrals gemäß Fig. 8,
Fig. 16 eine weitere Auslöseinformation mit einem Trainingsunterdrückungs-Zeitintervall,
Fig. 17 ein Soll-Zündsignal,
Fig. 18 ein Soll-Zündsignal mit einem Sondertrainings-Zeitintervall,
Fig. 19 ein weiteres Soll-Zündsignal mit einem Sondertrainings-Zeitintervall,
Fig. 20 ein weiteres Soll-Zündsignal mit einem Sondertrainings-Zeitintervall,
Fig. 21- ein weiteres Ausführungsbeispiel eines Auslösemoduls und Fig 22 einen Bewerter.

Fig. 1 zeigt ein Kraftfahrzeug 1 mit einem - in Fig. 4 in einer Prinzipdarstellung dargestellten - Fußgängerschutzsystem 10 zum Schutz von Fußgängern 18. Fig. 2 zeigt einen Querschnitt durch einen in Fig. 1 durch eine gepunktete Ellipse 11 markierten Bereich des Kraftfahrzeuges 1, und Fig. 3 zeigt das Kraftfahrzeug 1 in einer Frontansicht.

Das Kraftfahrzeug 1 weist eine anhebbare Motorhaube 4 auf, die mittels eines Aktors 3, wie z.B. einer Motorhauben-Airbagvorrichtung, aus einer Normalstellung 5 anhebbar ist. Um zu verhindern, dass aufgrund einer Zündung eines als Motorhauben-Airbagvorrichtung ausgestalteten Aktors 3 die Motorhaube 4 um mehr als einen vorbestimmten Weg angehoben wird, kann z.B. eine Motorhaubenfangvorrichtung in Form eines Seilzuges, einer Kette oder eines Anschlages vorgesehen sein. Selbstverständlich ist der Aktor 3 auch alternativ ausgestaltbar. Ein geeigneter Aktor ist in dem Artikel "Ein faser-optisches Sensorsystem für die Ansteuerung aktiver Systeme zum Fußgängerschutz" von O. Scherf und R. Bardini offenbart. Motorhaube im Sinne der Erfindung soll insbesondere eine Abdeckung eines vor einer Fahrgastzelle eines Kraftfahrzeuges liegenden Raumes bezeichnen.

Das Fußgängerschutzsystem 10 umfasst Aufprallerkennungssensoren SO1, SO2, SO3, SO4, SO5, SO6, SU1, SU2, SU3, SU4, SU5, SU6, die an mit Bezugszeichen PSO1, PSO2, PSO3, PSO4, PSO5, PSO6, PSU1, PSU2, PSU3, PSU4, PSU5, PSU6 bezeichneten Positionen des Kraftfahrzeuges 1 angeordnet sind. Die Aufprallerkennungssensoren SO1, SO2, SO3, SO4, SO5, SO6, SU1, SU2, SU3. SU4, SU5, SU6 können Sensoren zur Messung einer Deformation des Kraftfahrzeuges sein. Ein solcher Sensor kann ein faseroptischer Sensor oder ein in der DE 100 16 142 A1 offenbarter Sensor sein. Einen faseroptischen Sensor offenbart z.B. der Artike "Ein faser-optiches Sensorsystem für die Ansteuerung aktiver Systeme zum Fußgängerschutz" von O. Scherf und R. Bardini. Die Aufprallerkennungssensoren SO1, SO2, SO3, SO4, SO5, SO6, SU1, SU2, SU3, SU4, SU5, SU6 können auch Beschleunigungssensoren zum Messen einer Beschleunigung in eine oder mehrere Richtungen sein. Auch berührungslos arbeitende Sensoren wie Infrarotsensoren, Radargeräte, Laserscanner oder Kameras sind für sich oder in Kombination mit vorgenannten Sensoren einsetzbar.

Um vorliegenden Ausführungsbeispiel liefert der Aufprallerkennungssensor SO1 als Ausgangsgröße eine Beschleunigung aSO1, der Aufprallerkennungssensor S02 als Ausgangsgröße eine Beschleunigung aSO2, der Aufprallerkennungssensor SO3 als Ausgangsgröße eine Beschleunigung aSO3, der Aufprallerkennungssensor SO4 als Ausgangsgröße eine Beschleunigung aSO4, der Aufprallerkennungssensor SO5 als Ausgangsgröße eine Beschleunigung aSO5, der Aufprallerkennungssensor SO6 als Ausgangsgröße eine Beschleunigung aSO6, der Aufprallerkennungssensor SU1 als Ausgangsgröße eine Beschleunigung aSU1, der Aufprallerkennungssensor SU2 als Ausgangsgröße eine Beschleunigung aSU2, der Aufprallerkennungssensor SU3 als Ausgangsgröße eine Beschleunigung aSU3, der Aufprallerkennungssensor SU4 als Ausgangsgröße eine Beschleunigung aSU4, der Aufprallerkennungssensor SU5 als Ausgangsgröße eine Beschleunigung aSU5 und der Aufprallerkennungssensor SU6 als Ausgangsgröße eine Beschleunigung aSU6. Die Ausgestaltung der Aufprallerkennungs-sensoren SO1, SO2, SO3, SO4, SO5, SO6, SU1, SU2, SU3, SU4, SU5, SU6 als Beschleunigungssensoren ist dabei nur beispielhaft. Andere Sensoren sind in analoger Weise wie die nachfolgend beschriebenen Ausführungsbeispiele einsetzbar. Aus Gründen der Übersichtlichkeit werden die die Ausgangssignale aSO1, aSO2, aSO3, aSO4, aSO5, aSO6, aSU1, aSU2, aSU3, aSU4, aSU5, aSU6 der Aufprallerkennungssensoren SO1, SO2, SO3, SO4, SO5, SO6, SU1, SU2, SU3, SU4, SU5, SU6 auch als Beschleunigungswerte MaS mit

$$MaS = \begin{bmatrix} aSO1 & aSO2 & aSO3 & aSO4 & aSO5 & aSO6 \\ aSU1 & aSU2 & aSU3 & aSU4 & aSU5 & aSU6 \end{bmatrix}$$

bezeichnet.

Das Fußgängerschutzsystem 10 umfasst eine, ggf. einen Beschleunigungsmesser umfassende, Steuerung 2, mittels der der Aktor 3 durch ein Zündsignal FIRE ausgelöst werden kann, wenn die Steuerung 2 aufgrund der Ausgangssignale der Aufprallerkennungssensoren SO1, S02, S03, S04, SO5, S06, SU1, SU2, SU3, SU4, SU5, SU6 eine Kollision mit einem Fußgänger 18 erkennt. Dazu-sind-die Steuerung 2 und die Aufprallerkennungssensoren SO1, SO2, SO3, S04, SO5, S06, SU1, SU2, SU3, SU4, SU5, SU6 in geeigneter Weise datentechnisch, z.B. über Zuleitungen 15 und 16, miteinander verbunden.

In der Steuerung 2 sind - wie in Fig. 5 dargestellt - ein Auslösemodul 20 zur Ausgabe eines Zündvorschlags CRASH und eine Feuertabelle 21 implementiert. Die Feuertabelle 21 gibt den Zündvorschlag CRASH situationsabhängig als Zündsignal FIRE aus. So kann z.B. vorgesehen werden, dass das Zündsignal FIRE nur dann gleich dem Zündvorschlag CRASH ist, wenn die Geschwindigkeit v des Kraftfahrzeuges 1 in einem vorgegebenen Intervall liegt, und dass das Zündsignal FIRE andernfalls gleich 0 ist.

Fig. 6 zeigt das Auslösemodul 20 in einer beispielhaften Ausgestaltung. Das Auslösemodul 20 umfasst einen A/D-Wandler 25 (analog/digital-Wandler) zum Abtasten der Beschleunigungswerte MaS und zur Ausgabe abgetasteter Beschleunigungswerte Mas mit

$$Mas = \begin{bmatrix} asO1 & asO2 & asO3 & asO4 & asO5 & asO6 \\ asU1 & asU2 & asU3 & asU4 & asU5 & asU6 \end{bmatrix}$$

Die Abtastfrequenz der $\Delta t$ des A/D-Wandlers 25 kann z.B. 4 kHz betragen. Das Auslösemodul 20 umfasst zudem (digitale) Integratoren 31, 32, 33 und 34.

Mittels des Integrators 31 werden Pseudogeschwindigkeitswerte Mv0S mit

$$Mv0S = \begin{bmatrix} v0SO1 & v0SO2 & v0SO3 & v0SO4 & v0SO5 & v0SO6 \\ v0SU1 & v0SU2 & v0SU3 & v0SU4 & v0SU5 & v0SU6 \end{bmatrix}$$

zu einem Zeitpunkt $t_0$ gemäß

$$Mv0S = \int_{t_0-\tau_0}^{t_0} Mas \cdot dt$$

ermittelt, wobei $\tau_0$ die Länge eines Zeitintervalls $[t_0-\tau_0, t_0]$ bzw. 40 (vgl. Fig. 7) ist. Der Zeitpunkt $t_0$ bezeichnet den aktuellen Zeitpunkt, also den aktuellen Wert der Zeit t.

Mittels des Integrators 32 werden Pseudogeschwindigkeitswerte Mv1S mit

$$Mv1S = \begin{bmatrix} v1SO1 & v1SO2 & v1SO3 & v1SO4 & v1SO5 & v1SO6 \\ v1SU1 & v1SU2 & v1SU3 & v1SU4 & v1SU5 & v1SU6 \end{bmatrix}$$

zu einem Zeitpunkt $t_0-\tau_1$ gemäß

$$Mv1S = \int_{t_0-\tau_0-\tau_1}^{t_0-\tau_1} Mas \cdot dt$$

ermittelt.

Mittels des Integrators 33 werden Pseudogeschwindigkeitswerte Mv2S mit

$$Mv2S = \begin{bmatrix} v2SO1 & v2SO2 & v2SO3 & v2SO4 & v2SO5 & v2SO6 \\ v2SU1 & v2SU2 & v2SU3 & v2SU4 & v2SU5 & v2SU6 \end{bmatrix}$$

zu einem Zeitpunkt $t_0$-$\tau_2$ gemäß

$$Mv2S = \int_{t_0-\tau_0-\tau_2}^{t_0-\tau_2} Mas \cdot dt$$

ermittelt.

Mittels des Integrators 34 werden Pseudogeschwindigkeitswerte Mv3S mit

$$Mv3S = \begin{bmatrix} v3SO1 & v3SO2 & v3SO3 & v3SO4 & v3SO5 & v3SO6 \\ v3SU1 & v3SU2 & v3SU3 & v3SU4 & v3SU5 & v3SU6 \end{bmatrix}$$

zu einem Zeitpunkt $t_0$-$\tau_3$ gemäß

$$Mv3S = \int_{t_0-\tau_0-\tau_3}^{t_0-\tau_3} Mas \cdot dt$$

ermittelt.

Die Wirkung der Integratoren 31, 32, 33 und 34 verdeutlichen Fig. 7 und Fig. 8. Dabei zeigt Fig. 7 einen beispielhaften Verlauf des (abgetasteten) Beschleunigungswertes asO1 über die Zeit t bei einem Frontalzusammenstoß des Kraftfahrzeuges 1 mit einem Hindernis. Fig. 8 zeigt einen beispielhaften Verlauf des entsprechenden Pseudogeschwindigkeitswertes v0SO1 für $\tau_0$ = 24ms.

In der in Fig. 8 dargestellten beispielhaften Ausgestaltung beträgt $\tau_1$ 17 ms, $\tau_2$ 34 ms und $\tau_3$ 51 ms. In einer vorteilhaften Ausgestaltung kann $\tau_1$ 8 ms, $\tau_2$ 16 ms und $\tau_3$ 24 ms betragen.

Das Auslösemodul 20 umfasst weiterhin einen Auslösezusammenhang 30 zur Erzeugung des Zündvorschlags CRASH. Der Auslösezusammenhang 30 kann z.B. als neuronales Netz ausgebildet sein bzw. ein neuronales Netz umfassen, wie es in Fig. 9 in beispielhafter Ausgestaltung dargestellt ist. Das in Fig. 9 dargestellte beispielhafte neuronale Netz umfasst zwölf Eingangsknoten 50, 51, 52, 53, 54, 55, 56, 57, 58, 59, 5A, 5B, zwölf verdeckte Knoten 60, 61, 62, 63, 64, 65, 66, 67, 68, 69, 6A, 6B und einen Ausgangsknoten 70, wobei jeder Eingangsknoten 50, 51, 52, 53, 54, 55, 56, 57, 58, 59, 5A, 5B mit jedem verdeckten Knoten 60, 61, 62, 63, 64, 65, 66, 67, 68, 69; 6A, 6B und jeder verdeckte Knoten 60, 61, 62, 63, 64, 65, 66, 67, 68, 69, 6A, 6B mit dem Ausgangsknoten 70 verbunden ist._In Fig 9 sind jedoch aus Gründen der Übersichtlichkeit nicht alle Verbindungen zwischen den Eingangsknoten 50, 51, 52, 53, 54, 55, 56, 57, 58, 59, 5A, 5B und den verdeckten Knoten 60, 61, 62, 63, 64, 65, 66, 67, 68, 69, 6A, 6B dargestellt.

Eingangsgröße in den Eingangsknoten 50 ist der Pseudogeschwindigkeitswert v0SU1, Eingangsgröße in den Eingangsknoten 51 ist der Pseudogeschwindigkeitswert v1SU1, Eingangsgröße in den Eingangsknoten 52 ist der Pseudogeschwindigkeitswert v0SU2, Eingangsgröße in den Eingangsknoten 53 ist der Pseudogeschwindigkeitswert v1SU2, Eingangsgröße in den Eingangsknoten 54 ist der Pseudogeschwindigkeitswert v0SU3, Eingangsgröße in den Eingangsknoten 55 ist der Pseudogeschwindigkeitswert v1 SU3, Eingangsgröße in den Eingangsknoten 56 ist der Pseudogeschwindigkeitswert v0SO1, Eingangsgröße in den Eingangsknoten 57 ist der Pseudogeschwindigkeitswert v1SO1, Eingangsgröße in den Eingangsknoten 58 ist der Pseudogeschwindigkeitswert v0SO2, Eingangsgröße in den Eingangsknoten 59 ist der Pseudogeschwindigkeitswert v1 S02, Eingangsgröße in den Eingangsknoten 5A ist der Pseudogeschwindigkeitswert v0SO3 und Eingangsgröße in den Eingangsknoten 5B ist der Pseudogeschwindigkeitswert v1SO3. Ausgangsgröße aus dem Ausgangskoten 70 ist der Zündvorschlag CRASH. Es können auch weitere zwölf Eingangsknoten vorgesehen sein, deren Eingangsgrößen die Pseudo-geschwindigkeitswerte v2SU1, v3SU1, v2SU2, v3SU2, v2SU3, v3SU3, v2S01, v3S01, v2S02, v3S02, v2S03, v3S03 sind.

Das Fig. 9 in beispielhafter Ausgestaltung dargestellte neuronale Netz bzw. ein entsprechend auf vierundzwanzig Eingangsknoten erweitertes neuronale Netz wertet Kollisionen im Bereich der Positionen PS01, PSU1, PS02, PSU2, PSO3 und PSU3 aus. Es können, z.B. drei weitere entsprechende neuronale Netze zur Auswertung der Positionen PS02, PSU2, PS03, PSU3, PS04 und PSU4, zur Auswertung der Positionen PS03, PSU3, PSO4, PSU4, PS05 und PSU5 und zur Auswertung der Positionen PS04, PSU4, PSO5, PSU5, PS06 und PSU6 vorgesehen sein. Die Ausgangsknoten aller insgesamt vier neuronalen Netze können durch eine ODER-Logik zu einem Ausgang zusammengeführt werden.

Einzelheiten zu neuronalen Netzen können den in der US 5 684 701 zitierten Dokumenten "Techniques And Application Of Neural Networks", Taylor, M. und Lisboa, Ellis Horwood, West Sussex, England, 1993, "Naturally Intelligent Systems", Caudill, M. und Butler, G., MIT Press, Cambridge, 1990 und "Digital Neural Networks", Kung, S. Y., PTR Prentice Hall, Eaglewood Cliffs, NJ., 1993 entnommen werden.

Der Auslösezusammenhang 30 kann alternativ z.B. auch als Abfolge von Vergleichen mit Grenzwerten ausgestaltet werden. Fig. 10 zeigt einen Ausschnitt einer automatisch erzeugten Abfolge solcher Vergleiche mit Grenzwerten als Entscheidungsbaum 80. Dabei bezeichnen Bezugszeichen 81, 82, 83, 84, 85, 86, 87, 88 und 89 jeweils eine Abfrage, ob ein Pseudogeschwindigkeitswert kleiner ist als ein Grenzwert.

Fig. 11 zeigt ein Verfahren zum Herstellen des Kraftfahrzeuges 1. Dazu wird zunächst in einem Schritt 90 ein Test-Prototyp des Kraftfahrzeuges 1 erstellt, in den den Aufprallerkennungssensoren SO1, SO2, SO3, SO4, SO5, SO6, SU1, SU2, SU3, SU4, SU5, SU6 entsprechende Aufprallerkennungssensoren zum Messen einer Bewegungsgröße eingebaut werden. Der Test-Prototyp des Kraftfahrzeuges 1 wird einem Crashtest unterzogen, wobei die Ausgangssignale der den Aufprallerkennungssensoren SO1, S02, S03, S04, SO5, S06, SU1, SU2, SU3, SU4, SU5, SU6 entsprechenden Aufprallerkennungssensoren gemessen werden. Aus diesen Ausgangssignalen bzw. den Ausgangssignalen weiterer Crashtests wird eine Datenbasis aufgebaut. In dieser Datenbasis sind aus den vorgenannten Ausgangssignalen der den Aufprallerkennungssensoren SO1, SO2, SO3, SO4, SO5, SO6, SU1, SU2, SU3, SU4, SU5, SU6 entsprechenden Aufprallerkennungssensoren gemäß einem in Fig. 6 bzw. Fig. 21 beschriebenen Verfahren erzeugte Pseudogeschwindigkeitswerte Mv0S, Mv1S, Mv2S, Mv3S zusammen mit einer Auslöseinformation CRASHTRUE abgespeichert, die einen Soll-Zündzeitpunkt bzw. einen Soll-Auslösezeitpunkt angibt.

Dem Schritt 90 folgt ein Schritt 91, in dem der Auslösezusammenhang 30 auf der Grundlage der in der Datenbasis abgespeicherten Daten erzeugt wird. Dabei bleiben jedoch die Pseudogeschwindigkeitswerte Mv0S, Mv1S, Mv2S, Mv3S in einem Trainingsunterdrückungs-Zeitintervall um den Soll-Auslösezeitpunkt des Aktors 3 herum, in einem Trainingsunterdrückungs-Zeitintervall nach dem Soll-Auslösezeitpunkt des Aktors 3 oder vorteilhafterweise - wie im folgenden unter Bezugnahme auf Fig. 12, Fig. 13, Fig. 14, Fig. 15 und Fig. 16 erläutert - in einem Trainingsunterdrückungs-Zeitintervall vor dem Soll-Auslösezeitpunkt des Aktors 3 bei der Erzeugung des Auslösezusammenhanges 30 unberücksichtigt.

Fig. 12 zeigt den Pseudogeschwindigkeitswert gemäß Fig. 8 mit einem entsprechenden Trainingsunterdrükkungs-Zeitintervall $\tau_{hole}$, das vor einem mit $t_z$ bezeichneten Soll-Auslösezeitpunkt des Aktors 3 liegt. Der Soll-Auslösezeitpunkt $t_z$ ist dabei vorteilhafterweise der Zeitpunkt, bis zu dem der Aktor 3 spätestens ausgelöst werden soll. Das Trainingsunterdrückungs-Zeitintervall $\tau_{hole}$ ist zwischen 1 ms und 40 ms, insbesondere zwischen 2 ms und 10 ms, vorteilhafterweise in etwa 5 ms, lang. In dem vorliegenden Ausführungsbeispiel beträgt das Trainingsunterdrückungs-Zeitintervall $\tau_{hole}$ 5 ms.

Fig. 13 zeigt einen Ausschnitt aus Fig. 12 für den Bereich zwischen 0 ms und 40 ms. Fig. 14 zeigt die zugeordnete Auslöseinformation CRASHTRUE. Die Auslöseinformation CRASHTRUE ist vor dem Soll-Auslösezeitpunkt $t_z$ gleich 0 und nach dem Soll-Auslösezeitpunkt $t_z$ gleich 1, bleibt jedoch ebenso wie der Pseudogeschwindigkeitswert gemäß Fig. 13 in dem Trainingsunterdrückungs-Zeitintervall $\tau_{hole}$ vor dem Soll-Auslösezeitpunkt $t_z$ für die Erzeugung des Auslösezusammenhanges 30 unberücksichtigt. Dies kann z.B. dadurch erfolgen, dass die Pseudogeschwindigkeitswerte und die Auslöseinformation CRASHTRUE in dem Trainingsunterdrückungs-Zeitintervall $\tau_{hole}$ aus den Daten entfernt werden.

Fig. 15 und Fig. 16 zeigen ein dazu alternatives Vorgehen, das ebenfalls Pseudogeschwindigkeitswerte und die Auslöseinformation CRASHTRUE in dem Trainingsunterdrückungs-Zeitintervall $\tau_{hole}$ bei der Erzeugung des Auslösezusammenhanges 30 unberücksichtigt lässt. Dabei werden die Pseudogeschwindigkeitswerte zwar auch in dem Trainingsunterdrückungs-Zeitintervall $\tau_{hole}$ vor dem Soll-Auslösezeitpunkt $t_z$ für die Erzeugung des Auslösezusammenhanges 30 verwendet, die Auslöseinformation CRASHTRUE wird jedoch in dem Trainingsunterdrückungs-Zeitintervall $\tau_{hole}$ vor dem Soll-Auslösezeitpunkt $t_z$ um eine Variable 'egal' ergänzt, die angibt, dass sowohl eine während eines Trainings von dem Auslösezusammenhang 30 ausgegebene 0 als auch eine ausgegebene 1 für den Zündvorschlag CRASH richtig ist. Das heißt, egal ob der Auslösezusammenhang 30 während des Trainings bzw. Lernens innerhalb des Trainingsunterdrückungs-Zeitintervalls $\tau_{hole}$ als Zündvorschlag CRASH 0 oder 1 (oder einen anderen Wert) ausgibt, wird angenommen, dass die Lösung, also der Zündvorschlag CRASH gleich der Auslöseinformation CRASHTRUE ist.

Mittels der gemäß dem unter Bezugnahme auf Fig. 13, Fig. 14, Fig. 15 und Fig. 16 beschriebenen Vorgehen veränderten Daten der Datenbasis wird der Auslösezusammenhang 30 anschließend automatisch-mit dem Ziel erzeugt, dass für die verwendeten Daten der Zündvorschlag CRASH gleich der Auslöseinformation CRASHTRUE ist. Zur automatischen Erzeugung des Auslösezusammenhanges 30 in einer Ausgestaltung als in Fig. 9 dargestelltes neuronales Netzt können dafür herkömmliche Tools zur Erzeugung neuronaler Netzte verwendet werden.

Zur automatischen Erzeugung des Auslösezusammenhanges 30 in einer Ausgestaltung als in Fig. 10 dargestellten Entscheidungsbaum 80 kann z.B. die Routine "treefit" aus der "Statistics Toolbox" des Programms "MATLAB 7" von Mathworks venwendet werden. Dieses Programm kann unter der Internetadresse www.mathworks.com/company/aboutus/contact_us/contact_sales.html erworben werden. Einzelheiten zur Routine "treefit" sind unter der Internetadresse www.mathworks.com/access/helpdesk/help/toolbox/stats/treefit.html offenbart.

Alternativ zu dem unter Bezugnahme auf Fig. 12, Fig. 13, Fig. 14, Fig. 15 und Fig. 16 beschriebenen Vorgehen kann vorgesehen sein, dass das Soll-Zündsignal CRASHTRUE bei der Erzeugung des Auslösezusammenhanges 30 in einem Sondertrainings-Zeitintervall $\tau_{special}$ vor dem Soll-Auslösezeitpunkt $t_z$, um den Soll-Auslösezeitpunkt $t_z$ herum oder nach dem Soll-Auslösezeitpunkt $t_z$ durch einen Sondertrainings-Wert TRAINVALUE zu ersetzen. Ausführungsbeispiele für ein derartiges Vorgehen sind unter Bezugnahme auf Fig. 17, Fig. 18, Fig. 19 und Fig. 20 erläutert. Dabei zeigt Fig. 17 ein unverändertes Soll-Zündsignal und Fig. 18, Fig. 19 und Fig. 20 zeigen Soll-Zündsignale, bei denen der Wert 0 (vgl. Fig. 17) für die Erzeugung des Auslösezusammenhanges 30 in dem Sondertrainings-Zeitintervall $\tau_{special}$ vor dem Soll-Auslösezeitpunkt $t_z$ durch einen Sondertrainings-Wert TRAINVALUE ersetzt ist. In einer vorteilhaften Ausgestaltung ist das Sondertrainings-Zeitintervall zwischen 1 ms und 40 ms, insbesondere zwischen 2 ms und 10 ms, vorteilhafterweise in etwa 5 ms, lang.

In dem Ausführungsbeispiel gemäß Fig. 18 beträgt der Sondertrainings-Wert TRAINVALUE in dem gesamten Sondertrainings-Zeitintervall $\tau_{special}$ 0,5. In vorteilhafter Ausgestaltung ist der Sondertrainings-Wert - wie in Fig. 19 und Fig. 20 dargestellt - zeitvariant. Dabei zeigt Fig. 19 eine vorteilhafte Ausgestaltung, bei der der Sondertrainings-Wert TRAINVALUE einen stetigen Übergang zwischen dem Wert (in diesem Falle 0) des Soll-Zündsignals CRASHTRUE vor dem Sondertrainings-Zeitintervall $\tau_{special}$ bzw. vor dem Soll-Auslösezeitpunkt $t_z$ und dem Wert (in diesem Falle 1) des Soll-Zündsignals CRASHTRUE vor dem Sondertrainings-Zeitintervall $\tau_{special}$ bzw. vor dem Soll-Auslösezeitpunkt $t_z$ aufweist. Fig. 20 zeigt eine weitere vorteilhafte Ausgestaltung, bei der der Verlauf des Sondertrainings-Wertes TRAINVALUE derart gewählt ist, dass auch der Übergang der ersten zeitlichen Ableitung an den Grenzen des Sondertrainings-Zeitintervalls $\tau_{special}$ stetig ist.

Dem Schritt 91 folgt eine Abfrage 92, ob der so erzeugte Auslösezusammenhang 30 in Ordnung ist. Dazu wird der Auslösezusammenhang 30 mit den nicht im Schritt 91 verwendeten Einträgen der Datenbasis getestet. Ist der Auslösezusammenhang 30 in Ordnung, so folgt der Abfrage 92 ein Schritt 93. Andernfalls wird der Schritt 91 unter veränderten Bedingungen wiederholt.

In dem Schritt 93 wird der Auslösezusammenhang 30 in dem Steuergerät 2 implementiert. Das Steuergerät 2 wird anschließend zusammen mit den Aufprallerkennungssensoren S01, S02, SO3, SO4 SO5, SO6, SU1, SU2, SU3, SU4, SU5, SU6 und dem Aktor 3 in dem Kraftfahrzeug 1 verbaut.

Obwohl in Verbindung mit einer binären Auslöseinformation CRASHTRUE und einem binären Zündvorschlag CRASH erläutert, ist die Erfindung in gleicher Weise auch für komplexe Auslöseinformationen und Zündvorschläge anwendbar. Dies gilt sowohl für das unter Bezugnahme auf Fig. 13 und Fig. 14 beschriebene Vorgehen als auch für das unter Bezugnahme auf Fig. 15 und Fig. 16 beschriebene Vorgehen.

In dem vorgestellten bevorzugten Ausführungsbeispiel werden die Pseudogeschwindigkeitswerte Mv0S, Mv1S, Mv2S, Mv3S, also die zeitlichen Mittelwerte der (gemessenen) Beschleunigungswerte MaS, als Eingangs- und Trainingsgrößen des Auslösezusammenhanges 30 verwendet. Die (gemessenen) Beschleunigungswerte MaS bzw. die abgetasteten Beschleunigungswerte Mas können in gleicher Weise wie die Pseudogeschwindigkeitswerte Mv0S; Mv1S, Mv2S, Mv3S als unmittelbare und nicht nur mittelbare Eingangs- und Trainingsgrößen des Auslösezusammenhanges 30 verwendet werden. Dies gilt ebenfalls sowohl für das unter Bezugnahme auf Fig. 13 und Fig. 14 beschriebene Vorgehen als auch für das unter Bezugnahme auf Fig. 15 und Fig. 16 beschriebene Vorgehen. In entsprechender Abwandlung des unter Bezugnahme auf Fig. 13 und Fig. 14 beschriebenen Vorgehens werden dabei die (gemessenen) Beschleunigungswerte MaS bzw. die abgetasteten Beschleunigungswerte Mas in dem Bereich des Trainingsunterdrükkungs-Zeitintervalls $\tau_{hole}$ aus den Trainingsdaten des Auslösezusammenhanges 30 entfernt.

Fig. 21 zeigt ein zum Auslösemodul 20 alternatives Auslösemodul 120 in einer beispielhaften Ausgestaltung. Dabei sind die Integratoren 32, 33 und 34 durch Totzeitglieder 132, 133 und 134 ersetzt, die derart angeordnet sind, dass sich der Pseudogeschewindigkeitswert Mv1S als um die Zeit $\tau_1$ verzögerter Pseudogeschwindigkeitswert Mv0S, der Pseudogeschwindigkeitswert Mv2S als um die Zeit $\tau_2$ verzögerter Pseudogeschwindigkeitswert Mv0S und der Pseudogeschwindigkeitswert Mv3S als um die Zeit $\tau_3$ verzögerter Pseudogeschwindigkeitswert Mv0S ergibt.

Eine mögliche (einfache) Implementierung des Integrators 31 (und entsprechend angepasst für die Integratoren 32, 33 und 34) ist z.B.

$$Mv0S(i) = c \cdot \Delta t \sum_{j=i-\frac{\tau_0}{\Delta t}}^{i} Mas(j)$$

wobei i ein Laufindex zur Angabe des aktuellen Zeitpunktes $t_0$ und eine Konstante ist. Die Pseudogeschwindigkeitswerte Mv0S, Mv1S, Mv2S und Mv3S ergeben sich in diesem Fall z.B. gemäß folgender Zusammenhänge:

$$\mathrm{Mv0S} = \mathrm{Mv0S}(i)$$

$$\mathrm{Mv1S} = \mathrm{Mv0S}(i - \frac{\tau_1}{\Delta t})$$

$$\mathrm{Mv2S} = \mathrm{Mv0S}(i - \frac{\tau_2}{\Delta t})$$

und

$$\mathrm{Mv3S} = \mathrm{Mv0S}(i - \frac{\tau_3}{\Delta t})$$

Das Steuergerät 2 kann auch ein verteiltes System sein. Ein Steuergerät im Sinne der Erfindung muss nicht in einem einzigen Gehäuse untergebracht sein. Ein Steuergerät im Sinne der Erfindung kann auch ein einzelner Chip oder eine Platine sein.

Soweit Entscheidungsbäume im Zusammenhang mit der Erzeugung des Zündvorschlags CRASH genannt bzw. erwähnt sind, können diese auch durch Regression Trees, Association Tables, Rule Sets, Supervector Mashines oder andere Mashine-Learning-Verfahren ersetzt werden.

Anstelle der gemessen Größen bzw. deren Mittelwerte können auch Differenzen von gemessen Größen, Mittelwerte dieser Differenzen und/oder Differenzen von Mittelwerten verwendet werden. So kann z.B. vor den Integratoren 31, 32, 33, 34 in Fig. 6 und/oder Fig. 21 eine Differenzbildung vorgesehen werden, so dass anstelle der abgetasteten Beschleunigungswerte Mas Differenzwerte ΔMas Eingangsgrößen der Integratoren 31, 32, 33 bzw. 34 sind, wobei gelen kann

$$Mas = \begin{bmatrix} asO1 - asU1 \\ asO2 - asU2 \\ asO3 - asU3 \\ asO4 - asU4 \\ asO5 - asU5 \\ asO6 - asU6 \end{bmatrix}$$

oder

$$Mas = Mas(t) - Mas(t - \tau_1)$$

Die Schritte 90 und 91 und die Abfrage 92 des in Fig. 11 beschriebenen Verfahrens können durch ein im folgenden beschriebenes Verfahren ersetzt werden, wobei die Schritte 90 und 91 und die Abfrage 92 durch Schritte 90A, 90B, 90C und 90D ersetzt werden. Im Schritt 90A wird zunächst ähnlich wie im Schritt 90 ein Test-Prototyp des Kraftfahrzeuges 1 erstellt, in den den Aufprallerkennungssensoren SO1, S02, S03, S04, SO5, S06, SU1, SU2, SU3, SU4, SU5, SU6 entsprechende Aufprallerkennungssensoren zum Messen der Bewegungsgröße des Kraftfahrzeuges 1 eingebaut werden. Der Test-Prototyp des Kraftfahrzeuges 1 wird einem Crashtest unterzogen, wobei die Ausgangssignale der den Aufprallerkennungssensoren SO1, S02, SO3, S04, SO5, S06, SU1, SU2, SU3, SU4, SU5, SU6 entsprechenden Aufprallerkennungssensoren gemessen werden. Aus diesen Ausgangssignalen bzw. den Ausgangssignalen weiterer Crashtests wird eine in Fig. 22 mit Bezugszeichen 100 und in Tabelle 1 in der Spalte ‚Datensatz' beispielhaft dargestellte Datenbasis aufgebaut. In dieser Datenbasis 100 sind Datensätze D1 bis D20 aus den vorgenannten Ausgangssignalen der den Aufprallerkennungssensoren SO1, S02, S03, S04, SO5, SO6, SU1, SU2, SU3, SU4, SU5, SU6 entsprechenden Aufprallerkennungssensoren gemäß einem in Fig. 6 bzw. Fig. 21 beschriebenen Verfahren erzeugte Pseudogeschwindigkeitswerte Mv0S, Mv1S, Mv2S, Mv3S zusammen mit einem Soll-Zündsignal CRASHTRUE abgespeichert, das einen Soll-Zündzeitpunkt bzw. einen Soll-Auslösezeitpunkt des Aktors angibt. Tabelle 1 zeigt dabei mit welche Aufprallerkennungssensor-Konfiguration Cröße_bzw die Größen, aus der bzw. aus denen die Pseudogeschwindigkeitswerte Mv0S, Mv1S, Mv2S, Mv3S eines Datensatzes erzeugt worden sind, gemessen wurde bzw. gemessen wurden. Unterschiedliche Aufprallerkennungssensor-Konfigurationen können sich in der Anzahl, der Position oder der Art von Aufprallerkennungssensoren unterscheiden.

Es ist vorteilhafterweise vorgesehen, mit einem Crashtest mehr als einen Datensatz zu erzeugen. So sind die in Tabelle 1 dargestellten Datensätze D1 bis D20 z.B. durch insgesamt sechs Crashtests erzeugt worden. Dabei ordnet die Spalte Crashtest' in Tabelle 1 die Datensätze D1 bis D20 den einzelnen Crashtests zu.

Dem Schritt 90A folgt ein Schritt 90B, in dem als Auslösezusammenhang 30 verwendbare Auslösezusammenhänge auf der Grundlage der in der Datenbasis abgespeicherten Datensätze D1 bis D20 erzeugt werden. Dabei ist in beispielhafter Ausgestaltung vorgesehen, dass mittels des Datensatzes D1 ein Auslösezusammenhang 30A, mittels des Datensatzes D3 ein Auslösezusammenhang 30B, mittels des Datensatzes D6 ein Auslösezusammenhang 30C, mittels der Datensätze D8, D9 und D10 ein Auslösezusammenhang 30D, mittels der Datensätze D12 und D13 ein Auslösezusammenhang 30E, mittels der Datensätze D15 und D16 ein Auslösezusammenhang 30F und mittels der Datensätze D18 und D19 ein Auslösezusammenhang 30G zur Verwendung als Auslösezusammenhang 30 generiert wird. Dabei bleiben jedoch in vorteilhafter Ausgestaltung die Pseudogeschwindigkeitswerte Mv0S, Mv1S, Mv2S, Mv3S in dem Trainingsunterdrückungs-Zeitintervall um den Soll-Auslösezeitpunkt des Aktors 3 herum, in einem Trainingsunterdrückungs-Zeitintervall nach dem Soll-Auslösezeitpunkt des Aktors 3 oder vorteilhafterweise - wie unter Bezugnahme auf Fig. 12, Fig. 13, Fig. 14, Fig. 15 und Fig. 16 erläutert - in einem Trainingsunterdrückungs-Zeitintervall vor dem Soll-Auslösezeitpunkt des Aktors 3 bei der Erzeugung der Auslösezusammenhänge 30A, 30B, 30C, 30D, 30E, 30F und 30G unberücksichtigt. Alternativ kann vorteilhafterweise auch gemäß dem unter Bezugnahme auf Fig. 18, Fig. 19 und Fig. 20 beschriebenen Verfahren vorgegangen werden.

Mittels der gemäß dem unter Bezugnahme auf Fig. 13, Fig. 14, Fig. 15 und Fig. 16 bzw. Fig. 18, Fig. 19 und Fig. 20 beschriebenen Vorgehen veränderten Daten der Datenbasis 100 werden die Auslösezusammenhänge 30A, 30B, 30C, 30D, 30E, 30F und 30G anschließend automatisch mit dem Ziel erzeugt, dass für die verwendeten Daten der Zündvorschlag CRASH gleich dem Soll-Zündsignal CRASHTRUE ist.

Dem Schritt 90B folgt ein Schritt 90C, in dem den Auslösezusammenhängen 30A, 30B, 30C, 30D, 30E, 30F und 30G mittels eines in Fig. 22 dargestellten Bewerters 101 je eine Abweichungszahl E zugeordnet wird. Dabei wird im folgenden die dem Auslösezusammenhang 30A zugeordnete Abweichungszahl E mit $E_{30A}$, die dem Auslösezusammenhang 30B zugeordnete Abweichungszahl E mit $E_{30B}$, die dem Auslösezusammenhang 30C zugeordnete Abweichungszahl E mit $E_{30C}$, die dem Auslösezusammenhang 30D zugeordnete Abweichungszahl E mit $E_{30D}$, die dem Auslösezusammenhang 30E zugeordnete Abweichungszahl E mit $E_{30E}$, die dem Auslösezusammenhang 30F zugeordnete Abweichungszahl E mit $E_{30F}$ und die dem Auslösezusammenhang 30G zugeordnete Abweichungszahl E mit $E_{30G}$, bezeichnet.

Mittels des Bewerters 101 wird die Abweichungszahl E z.B. gemäß

$$E = \frac{1}{i2 - i1} \sum_{i=i1}^{i2} \left| CRASHTRUE - CRASH \right|$$

oder gemäß

$$E = \frac{1}{i2 - i1} \sum_{i=i1}^{i2} (CRASHTRUE - CRASH)^2$$

erzeugt, wobei [i1,i2] ein Intervall in Form von Indizes angibt, in dem die Bewertung erfolgt. Da kann z.B. i1 gleich 0 und i2 gleich dem höchsten Index eines Datensatzes sein. Vorteilhafterweise ist der Wert i2-i1 für alle Abweichungszahlen $E_{30A}$, $E_{30B}$, $E_{30C}$, $E_{30D}$, $E_{30E}$, $E_{30F}$ und $E_{30G}$ gleich groß.

In besonders vorteilhafter Ausgestaltung werden zumindest zwei, insbesondere zumindest zehn, vorteilhafterweise zumindest dreißig Varianten der Auslösezusammenhänge 30A, 30B, 30C, 30D, 30E, 30F und 30G generiert und zur Auswahl der Aufprallerkennungssensoren bzw. des Auslösezusammenhanges verwendet. Dabei kann vorgesehen sein, mehr als hundert Varianten der Auslösezusammenhänge 30A, 30B, 30C, 30D, 30E, 30F und 30G zu generieren.

Vorgenanntes Verfahren ist besonders vorteilhaft in Verbindung mit neuronalen Netzen einsetzbar. So werden in beispielhafter Ausgestaltung basierend auf jedem der Datensätze D1 bis D20 je hundert als Auslösezusammenhang 30A, 30B, 30C, 30D, 30E, 30F bzw. 30G verwendbare neuronale Netze trainiert, so dass für den Auslösezusammenhang 30A hundert neuronale Netze und damit hundert Varianten des Auslösezusammenhanges 30A, für den Auslösezusammenhang 30B hundert neuronale Netze und damit hundert Varianten des Auslösezusammenhanges 30B, für den Auslösezusammenhang 30C hundert neuronale Netze und damit hundert Varianten des Auslösezusammenhanges 30C, für den Auslösezusammenhang 30D dreihundert neuronale Netze und damit dreihundert Varianten des Auslösezusammenhanges 30D, für den Auslösezusammenhang 30E zweihundert neuronale Netze und damit zweihundert Varianten des Auslösezusammenhanges 30E, für den Auslösezusammenhang 30F zweihundert neuronale Netze und damit zweihundert Varianten des Auslösezusammenhanges 30F und für den Auslösezusammenhang 30G zweihundert neuronale Netze und damit zweihundert Varianten des Auslösezusammenhanges 30G generiert werden.

Tabelle 1

| Datensatz | Crashtest | Aufprallerkennungssensor-Konfiguration |
|---|---|---|
| D1 | #1 | A |
| D2 | #2 | A |
| D3 | #3 | B |
| D4 | #4 | B |
| D5 | #4 | B |
| D6 | #5 | C |
| D7 | #6 | C |
| D8 | #3 | D |
| D9 | #3 | D |
| D10 | #3 | D |
| D11 | #4 | D |
| D12 | #1 | E |
| D13 | #1 | E |
| D14 | #2 | E |
| D15 | #1 | F |
| D16 | #1 | F |
| D17 | #2 | F |
| D18 | #1 | G |
| D19 | #1 | G |
| D20 | #2 | G |

In vorgenannter Ausgestaltung wird mittels des Bewerters 101 die Abweichungszahl E z.B. gemäß

$$E = \frac{1}{i2 - i1} \sum_{i=i1}^{i2} \left| CRASHTRUE - \frac{1}{L} \sum_{x=1}^{L} CRASH_x \right|$$

oder gemäß

$$E = \frac{1}{L(i2 - i1)} \sum_{i=i1}^{i2} \sum_{x=1}^{L} \left| CRASHTRUE - CRASH_x \right|$$

oder gemäß

$$E = \frac{1}{i2 - i1} \sum_{i=i1}^{i2} \left( CRASHTRUE - \frac{1}{L} \sum_{x=1}^{L} CRASH_x \right)^2$$

oder gemäß

$$E = \frac{1}{L(i2 - i1)} \sum_{i=i1}^{i2} \sum_{x=1}^{L} \left( CRASHTRUE - CRASH_x \right)^2$$

erzeugt, wobei L die Anzahl der Varianten eines Auslösezusammenhanges 30A, 30B, 30C, 30D, 30E, 30F bzw. 30G und x der Index für einzelne Varianten eines Auslösezusammenhanges 30A, 30B, 30C, 30D, 30E, 30F und 30G ist. So mit gilt L=100 für die Auslöse-zusammenhänge 30A, 30B und 30C, L=300 für den Auslösezusammenhang 30D und L=200 für die Auslösezusammenhänge 30E, 30F und 30G.

In vorteilhafter Ausgestaltung werden die Abweichungszahlen $E_{30A}$, $E_{30B}$, $E_{30C}$, $E_{30D}$, $E_{30E}$, $E_{30F}$ und $E_{30G}$ für die Auslösezusammenhänge 30A, 30B, 30C, 30D, 30E, 30F und 30G in Abhängigkeit von Zündvorschlägen $CRASH_{30A}$, $CRASH_{30B}$, $CRASH_{30C}$, $CRASH_{30D}$, $CRASH_{30E}$, $CRASH_{30F}$ bzw. $CRASH_{30G}$ ermittelt, die auf gemessene Größen zurückgehen, die nicht zur Generierung des jeweiligen Auslösezusammenhanges 30A, 30B, 30C, 30D, 30E, 30F und 30G verwendet worden sind. So wird die Abweichungszahl $E_{30A}$ in Abhängigkeit des Soll-Zündsignals CRASHTRUE des Datensatzes D2 und eines mittels des Auslösezusammenhanges 30A in Abhängigkeit der Pseudogeschwindigkeitswerte Mv0S, Mv1S, Mv2S, Mv3S des Datensatzes D2 ermittelten Zündvorschlages $CRASH_{30A}$ ermittelt. Entsprechend wird die Abweichungszahl $E_{30B}$ in Abhängigkeit des Soll-Zündsignals CRASHTRUE der Datensätze D4 und D5 und eines mittels des Auslösezusammenhanges 30B in Abhängigkeit der Pseudogeschwindigkeitswerte Mv0S, Mv1S, Mv2S, Mv3S der Datensätze D4 und D5 ermittelten Zündvorschlages $CRASH_{30B}$ ermittelt.

Die Abweichungszahl $E_{30C}$ wird in Abhängigkeit des Soll-Zündsignals CRASHTRUE des Datensatzes D7 und eines mittels des Auslösezusammenhanges 30C in Abhängigkeit der Pseudogeschwindigkeitswerte Mv0S, Mv1S, Mv2S, Mv3S des Datensatzes D7 ermittelten Zündvorschlages $CRASH_{30C}$ ermittelt. Die Abweichungszahl $E_{30D}$ wird in Abhängigkeit des Soll-Zündsignals CRASHTRUE des Datensatzes D11 und eines mittels, des Auslösezusammenhanges 30D in Abhängigkeit der Pseudogeschwindigkeitswerte Mv0S, Mv1S, Mv2S, Mv3S des Datensatzes D11 ermittelten Zündvorschlages $CRASH_{30D}$ ermittelt. Die Abweichungszahl $E_{30E}$ wird in Abhängigkeit des Soll-Zündsignals CRASHTRUE des Datensatzes D14 und eines mittels des Auslösezusammenhanges 30E in Abhängigkeit der Pseudogeschwindigkeitswerte Mv0S, Mv1S, Mv2S, Mv3S des Datensatzes D14 ermittelten Zündvorschlages $CRASH_{30E}$ ermittelt. Die Abweichungszahl $E_{30F}$ wird in Abhängigkeit des Soll-Zündsignals CRASHTRUE des Datensatzes D17 und eines mittels des Auslösezusammenhanges 30F in Abhängigkeit der Pseudogeschwindigkeitswerte Mv0S, Mv1S, Mv2S, Mv3S des Datensatzes D17 ermittelten Zündvorschlages $CRASH_{30F}$ ermittelt. Die Abweichungszahl $E_{30G}$ wird in Abhängigkeit des Soll-Zündsignals CRASHTRUE des Datensatzes D20 und eines mittels des Auslösezusammenhanges 30G in Abhängigkeit der Pseudogeschwindigkeitswerte Mv0S, Mv1S, Mv2S, Mv3S des Datensatzes D20 ermittelten Zündvorschlages $CRASH_{30G}$ ermittelt.

Dem Schritt 90C folgt ein Schritt 90D, in dem der Aufprallerkennungssensor und der entsprechende Auslösezusammenhang 30A, 30B, 30C, 30D, 30E, 30F bzw. 30G zum Einbau in das bzw. zur Implementierung in dem Kraftfahrzeug 1 ausgewählt wird, für den die kleinste Abweichungszahl $E_{30A}$, $E_{30B}$, $E_{30C}$, $E_{30D}$, $E_{30E}$, $E_{30F}$ und $E_{30G}$ erzielt worden ist. Ist z.B. die Abweichungszahl $E_{30B}$ die kleinste der Abweichungszahlen $E_{30A}$, $E_{30B}$, $E_{30C}$, $E_{30D}$, $E_{30E}$, $E_{30F}$ bzw. $E_{30G}$, so werden die Aufprallerkennungssensor-Konfiguration B und der Auslösezusammenhang 30B ausgewählt.

**Bezugszeichenliste**

| | |
|---|---|
| 1 | Kraftfahrzeug |
| 2 | Steuergerät |
| 3 | Aktor |
| 4 | Motorhaube |
| 5 | Normalstellung |
| 10 | Fußgängerschutzsystem |
| 11 | gepunktete Ellipse |
| 15, 16 | Zuleitungen |
| 18 | Fußgänger |
| 20, 120 | Auslösemodul |
| 21 | Feuertabelle |
| 25 | A/D-Wandler |
| 30, 30A, 30B, 30C, 30D, 30E, 30F, 30G | Auslösezusammenhang |
| 31, 32, 33, 34, | Integrator |
| 40 | Zeitintervall |
| 50, 51, 52, 53, 54, 55, 56, 57, 58, 59, 5A, 5B | Eingangsknoten |
| 60, 61, 62, 63, 64, 65, 66, 67, 68, 69, 6A, 6B | verdeckter Knoten |
| 70 | Ausgangsknoten |
| 80 | Entscheidungsbaum |
| 81, 82, 83, 84, 85, 86, 87, 88, 89, 92 | Abfrage |
| 90,91,93 | Schritt |
| 100 | Datenbasis |
| 101 | Bewerter |
| 132, 133, 134 | Totzeitglied |

| | |
|---|---|
| CRASH, $CRASH_{30A}$, $CRASH_{30B}$, $CRASH_{30C}$, $CRASH_{30D}$, $CRASH_{30E}$, $CRASH_{30F}$ $CRASH_{30G}$ | Zündvorschlag |
| CRASHTRUE | Auslöseinformation |
| $E_{30A}$, $E_{30B}$, $E_{30C}$, $E_{30D}$, $E_{30E}$, $E_{30F}$, $E_{30G}$ | Abweichugszahl |
| FIRE | Zündsignal |
| MaS, Mas, aSO1 | Beschleunigungswert |
| Mv0S, Mv1S, Mv2S, Mv3S, | |

| | |
|---|---|
| v0SO1; v1SO1, v2SO1, v3SO1 | Pseudogeschwindigkeitswert |
| PSO1, PSO2, PS03, PS04, PSO5, PS06, PSU1, PSU2, PSU3, PSU4, PSU5, PSU6 | Position |
| SO1, S02, S03, S04, SO5, SO6, SU1, SU2, SU3, SU4, SU5, SU6 | Aufprallerkennungssensor |
| t | Zeit |
| to | aktueller Zeitpunkt |
| $t_z$ | Soll-Auslösezeitpunkt |
| TRAINVALUE | Sondertrainings-Wert |
| $\tau_0$ | Länge eines Zeitintervalls |
| $\tau_0$, $\tau_1$, $\tau_2$, $\tau_3$ | Länge eines Zeitintervalls oder Zeit(-verzögerung) |
| $\tau_{hole}$ | Trainingsunterdrückungs-Zeitintervall |
| $\tau_{special}$ | Sondertrainings-Zeitintervall |

## Patentansprüche

1. Fußgängerschutzsystem (10) für ein Kraftfahrzeug (1) mit zumindest einem Aufprallerkennungssensor (SO1) zur Erkennung eines Aufpralls eines Fußgängers (18) auf das Kraftfahrzeug (1), wobei das Fußgängerschutzsystem (10) einen mittels eines Zündsignals (CRASH, FIRE) steuerbaren Aktor (3) zum Anheben einer Motorhaube (4) des Kraftfahrzeuges (1) umfasst, **dadurch gekennzeichnet, dass** das Fußgängerschutzsystem (10) ein Steuergerät (2) zur Ermittlung des Zündsignals (CRASH, FIRE) in-Abhängigkeit eines zeitlichen Mittelwertes (Mv0S) einer mittels des Aufprallerkennungssensors (SO1) gemessenen Größe (aSO1) über zumindest ein erstes Zeitintervall ($[t_0-\tau_0, t_0]$) umfasst.

2. Fußgängerschutzsystem (10) nach Anspruch 1, **dadurch gekennzeichnet, dass** das Zündsignal (CRASH, FIRE) mittels des Steuergerätes (2) in Abhängigkeit eines zeitlichen Mittelwertes (v0SO1) der mittels des Aufprallerkennungssensors (SO1) gemessenen Größe (aSO1) über ein zweites, von dem ersten Zeitintervall ($[t_0-\tau_0,t_0]$) verschiedenes, Zeitintervall ($[t_0-\tau_0-\tau_1,t_0-\tau_1]$) ermittelbar ist.

3. Fußgängerschutzsystem (10) nach Anspruch 1 oder 2, **dadurch gekennzeichnet, dass** das Zündsignal (CRASH, FIRE) mittels des Steuergerätes (2) in Abhängigkeit zeitlicher Mittelwerte (v0SO1, v1SO1, v2SO1, v3S01) der mittels des Aufprallerkennungssensors (SO1) gemessenen Größe (aS01) in zwei bis zwanzig unterschiedlichen Zeitintervallen ($[t_0-\tau_0,t_0]$, $[t_0-\tau_0-\tau_1-t_0-\tau_1]$, $[t_0-\tau_0-\tau_2,t_0-\tau_2]$, $(t_0-\tau_0-\tau_3-t_0-\tau_3]$) ermittelbar ist.

4. Fußgängerschutzsystem (10) nach Anspruch 1 oder 2, **dadurch gekennzeichnet, dass** das Zündsignal (CRASH, FIRE) mittels des Steuergerätes (2) in Abhängigkeit zeitlicher Mittelwerte (v0SO1, v1SO1, v2SO1, v3S01) der mittels des Aufprallerkennungssensors (SO1) gemessenen Größe (aS01) in zwei bis fünf unterschiedlichen Zeitintervallen ($[t_0-\tau_0,t_0]$, $[t_0-\tau0-\tau_1,t_0-\tau_1]$, $[t_0-\tau0-\tau_2,t_0-\tau_2]$, $[t_0-\tau0-\tau_3,t_0-\tau_3]$), ermittelbar ist.

5. Fußgängerschutzsystem (10) nach einem der vorhergehenden Ansprüche, **dadurch gekennzeichnet, dass** die Zeitintervalle $[t_0-\tau_0,t_0]$, $[t_0-\tau_0-\tau_1,t_0-\tau_1]$, $[t_0-\tau_0-\tau_2,t_0-\tau_2]$, $[t_0-\tau_0-\tau_3,t_0-\tau_3]$) zwischen 1 ms und 200 ms lang sind.

6. Fußgängerschutzsystem (10) nach einem der vorhergehenden Ansprüche, **dadurch gekennzeichnet, dass** die Zeitintervalle ($[t_0-\tau_0,t_0]$, $[t_0-\tau_0-\tau_1,t_0-\tau_1]$,$[t_0-\tau_0-\tau_2,t_0-\tau_2]$,$[t_0-\tau_0-\tau_3,t_0-\tau_3]$) im wesentlichen gleich lang sind.

7. Fußgängerschutzsystem (10) nach einem der vorhergehenden Ansprüche, **dadurch gekennzeichnet, dass** zumindest zwei Zeitintervalle ($[t_0-\tau_0,t_0]$, $[t_0-\tau_0-\tau_1,t_0-\tau_1]$, $[t_0-\tau_0-\tau_2,t_0-\tau_2]$, $[t_0-\tau_0-\tau_3,t_0-\tau_3]$) zwischen 1 ms und 50 ms versetzt sind.

8. Fußgängerschutzsystem (10) nach Anspruch 7, **dadurch gekennzeichnet, dass** die Zeitintervalle ($[t_0-\tau_0,t_0]$, $[t_0-$

$\tau_0$-$\tau_1$,$t_0$-$\tau_1$], [$t_0$-$\tau_0$-$\tau_2$,$t_0$-$\tau_2$], [$t_0$-$\tau_0$-$\tau_3$,$t_0$-$\tau_3$]) zwischen 1 ms und 50 ms versetzt sind.

## Claims

1. Pedestrian protection system (10) for a motor vehicle (1) having at least one impact-detection sensor (SO1) for detecting an impact of a pedestrian (18) against the vehicle (1) wherein the pedestrian protection system (10) comprises an actuator (3) which can be controlled by means of an ignition signal (CRASH, FIRE) and has the purpose of raising an engine bonnet (4) of the motor vehicle (1), **characterized in that** the pedestrian protection system (10) comprises a control unit (2) for determining the ignition signal (CRASH, FIRE) as a function of a chronological mean value (MvOS) of a variable (aSO1) measured by means of the impact-detection sensor (SO1) over at least a first time interval ([$t_0$-$\tau_0$, $t_0$]).

2. Pedestrian protection system (10) according to Claim 1, **characterized in that** the ignition signal (CRASH, FIRE) can be determined by means of the control unit (2) as a function of a chronological mean value (v0SO1) of the variable (aSO1) which is measured by means of the impact-detection sensor (SO1) over a second time interval ([$t_0$-$\tau_0$-$\tau_1$,$t_0$-$\tau_1$]) which is different from the first time interval ([$t_0$-$\tau_0$,$t_0$]).

3. Pedestrian protection system (10) according to Claim 1 or 2, **characterized in that** the ignition signal (CRASH, FIRE) can be determined by means of the control unit (2) as a function of chronological mean values (v0SO1, v1SO1, v2SO1, v3SO1) of the variable (aSO1) which is measured by means of the impact-detection sensor (SO1) in two to twenty different time intervals ([$t_0$-$\tau_0$,$t_0$]), ([$t_0$-$\tau_0$-$\tau_1$,$t_0$-$\tau_1$]), ([$t_0$-$\tau_0$-$\tau_2$,$t_0$-$\tau_2$], ([$t_0$-$\tau_0$-$\tau_3$,$t_0$-$\tau_3$]).

4. Pedestrian protection system (10) according to Claim 1 or 2, **characterized in that** the ignition signal (CRASH, FIRE) can be determined by means of the control unit (2) as a function of chronological mean values (v0SO1, v1SO1, v2SO1, v3SO1) of the variable (aSO1) which is measured by means of the impact-detection sensor (SO1) in two to five different time intervals ([$t_0$-$\tau_0$,$t_0$], [$t_0$-$\tau_0$,$\tau_1$,$t_0$-$\tau_1$], [$t_0$-$\tau_0$,$\tau_2$,$t_0$-$\tau_2$], [$t_0$-$\tau_0$,$\tau_3$,$t_0$-$\tau_3$].

5. Pedestrian protection system (10) according to one of the preceding claims, **characterized in that** the time intervals ([$t_0$-$\tau_0$,$t_0$], [$t_0$-$\tau_0$-$\tau_1$,$t_0$-$\tau_1$], [$t_0$-$\tau_0$-$\tau_2$, $t_0$-$\tau_2$], [$t_0$-$\tau_0$-$\tau_3$, $t_0$-$\tau_3$]) are between 1 ms and 200 ms long.

6. Pedestrian protection system (10) according to one of the preceding claims, **characterized in that** the time intervals ([$t_0$-$\tau_0$, $t_0$], [$t_0$-$\tau_0$-$\tau_1$,$t_0$-$\tau_1$], [$t_0$-$\tau_0$-$\tau_2$,$t_0$-$\tau_2$], [$t_0$-$\tau_0$-$\tau_3$, $t_0$-$\tau_3$]) are essentially of the same length.

7. Pedestrian protection system (10) according to one of the preceding claims, **characterized in that** at least two time intervals ([$t_0$-$\tau_0$,$t_0$], [$t_0$-$\tau_0$-$\tau_1$,$t_0$-$\tau_1$],[$t_0$-$\tau_0$-$\tau_2$, $t_0$-$\tau_2$], [$t_0$-$\tau_0$-$\tau_3$,$t_0$-$\tau_3$]) are shifted between 1 ms and 50 ms.

8. Pedestrian protection system (10) according to Claim 7, **characterized in that** the time intervals ([$t_0$-$\tau_0$, $t_0$], [$t_0$-$\tau_0$-$\tau_1$,$t_0$-$\tau_1$],[$t_0$-$\tau_0$-$\tau_2$,$t_0$-$\tau_2$], [$t_0$-$\tau_0$-$\tau_3$,$t_0$-$\tau_3$]) are shifted between 1 ms and 50 ms.

## Revendications

1. Système (10) de protection des piétons pour un véhicule automobile (1), qui présente au moins un détecteur (SO1) de détection des collisions qui permet de détecter la collision d'un piéton (18) avec le véhicule automobile (1),
le système (10) de protection des piétons comportant un actionneur (3) qui peut être commandé au moyen d'un signal d'allumage (CRASH, FIRE) pour relever le capot (4) du moteur du véhicule automobile (1), **caractérisé en ce que**
le système (10) de protection des piétons comporte un appareil de commande (2) qui détermine le signal d'allumage (CRASH, FIRE) en fonction d'une valeur temporelle moyenne (MvOS), calculée sur au moins un premier intervalle de temps ([$t_0$-$\tau_0$, $t_0$]), d'une grandeur (aSO1) mesurée au moyen du détecteur (SO1) de détection des collisions.

2. Système (10) de protection des piétons selon la revendication 1, **caractérisé en ce que** le signal d'allumage (CRASH, FIRE) peut être déterminé au moyen de l'appareil de commande (2) en fonction d'une valeur moyenne temporelle (v0SO1), calculée sur un deuxième intervalle de temps ([$t_0$-$\tau_0$,$t_0$]) différent du premier intervalle de temps ([$t_0$-$\tau_0$-$\tau_1$,$t_0$-$\tau_1$]), de la grandeur (aSO1) mesurée au moyen du détecteur (SO1) de détection des collisions.

3. Système (10) de protection des piétons selon les revendications 1 ou 2, **caractérisé en ce que** le signal d'allumage (CRASH, FIRE) peut être déterminé au moyen de l'appareil de commande (2) en fonction de valeurs moyennes temporelles (v0SO1, v1SO1, v2SO1, v3SO1), calculées sur deux à vingt intervalles de temps ($[t_0-\tau_0, t_0]$, $[t_0-\tau_0-\tau_1, t_0-\tau_1]$, $[t_0-\tau_0-\tau_2, t_0-\tau_2]$, $[t_0-\tau_0-\tau_3, t_0-\tau_3]$) différents, de la grandeur (aSO1) mesurée au moyen du détecteur (SO1) de détection des collisions.

**4.** Système (10) de protection des piétons selon les revendications 1 ou 2, **caractérisé en ce que** le signal d'allumage (CRASH, FIRE) peut être déterminé au moyen de l'appareil de commande (2) en fonction de valeurs moyennes temporelles (v0SO1, v1SO1, v2SO1, v3SO1), calculées sur deux à cinq intervalles de temps ($[t_0-\tau_0, t_0]$, $[t_0-\tau_0-\tau_1, t_0-\tau_1$, $[t_0-\tau_0-\tau_2, t_0-\tau_2]$, $[t_0-\tau_0-\tau_3, t_0-\tau_3]$) différents, de la grandeur (aSO1) mesurée au moyen du détecteur (SO1) de détection des collisions.

**5.** Système (10) de protection des piétons selon l'une des revendications précédentes, **caractérisé en ce que** les intervalles de temps ($[t_0-\tau_0,t_0]$, $[t_0-\tau_0-\tau_1, t_0-\tau_1]$, $[t_0-\tau_0-\tau_2, t_0-\tau_2]$, $[t_0-\tau_0-\tau_3, t_0-\tau_3]$) ont une longueur de 1 ms à 200 ms.

**6.** Système (10) de protection des piétons selon l'une des revendications précédentes, **caractérisé en ce que** les intervalles de temps ($[t_0-\tau_0,t_0]$, $[t_0-\tau_0-\tau_1, t_0-\tau_1]$, $[t_0-\tau_0-\tau_2, t_0-\tau_2]$, $[t_0-\tau_0-\tau_3, t_0-\tau_3]$) ont essentiellement la même longueur.

**7.** Système (10) de protection des piétons selon l'une des revendications précédentes, **caractérisé en ce qu'**au moins deux intervalles de temps ($[t_0-\tau_0, t_0]$, $[t_0-\tau_0-\tau_1, t_0-\tau_1]$, $[t_0-\tau_0-\tau_2, t_0-\tau_2]$, $[t_0-\tau_0-\tau_3, t_0-\tau_3]$) sont décalés de 1 ms à 50 ms.

**8.** Système (10) de protection des piétons selon la revendication 7, **caractérisé en ce que** les intervalles de temps ($[t_0-\tau_0, t_0]$, $[t_0-\tau_0-\tau_1, t_0-\tau_1]$, $[t_0-\tau_0-\tau_2, t_0-\tau_2]$, $[t_0-\tau_0-\tau_3, t_0-\tau_3]$) sont décalés de 1 ms à 50 ms.

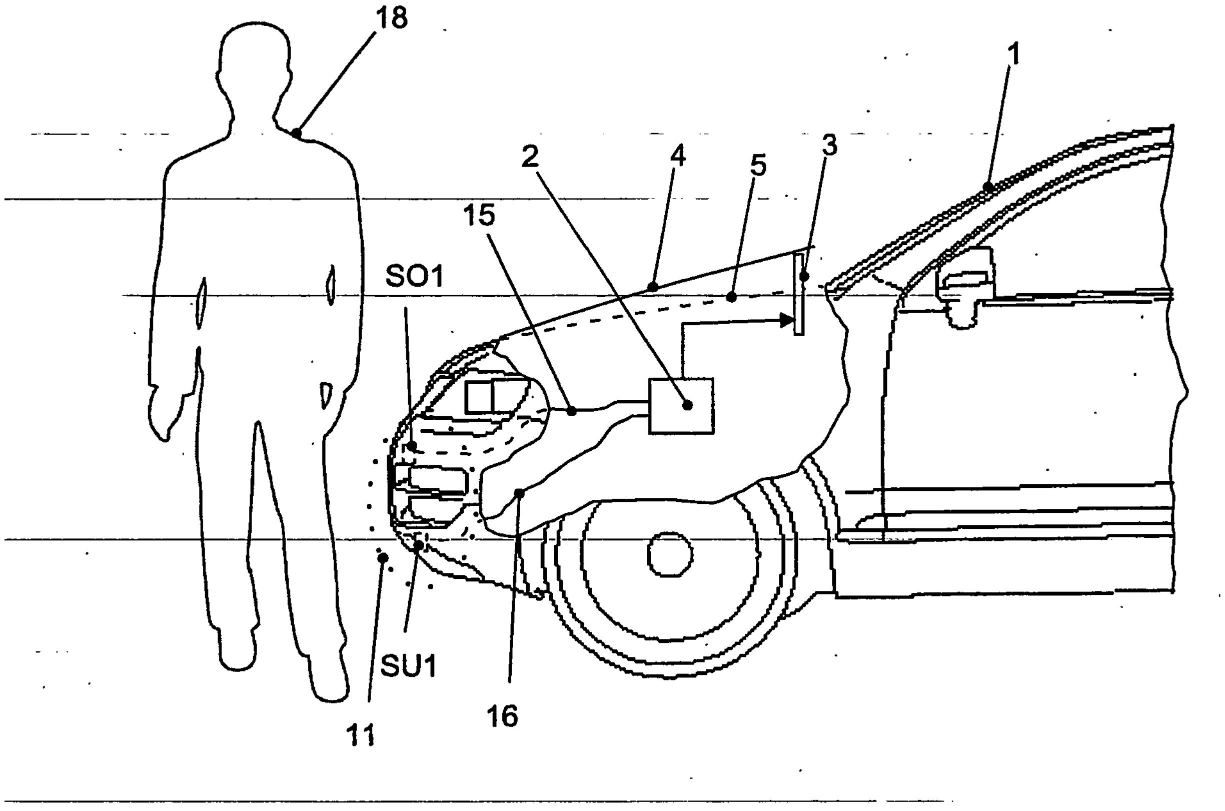


Fig. 1

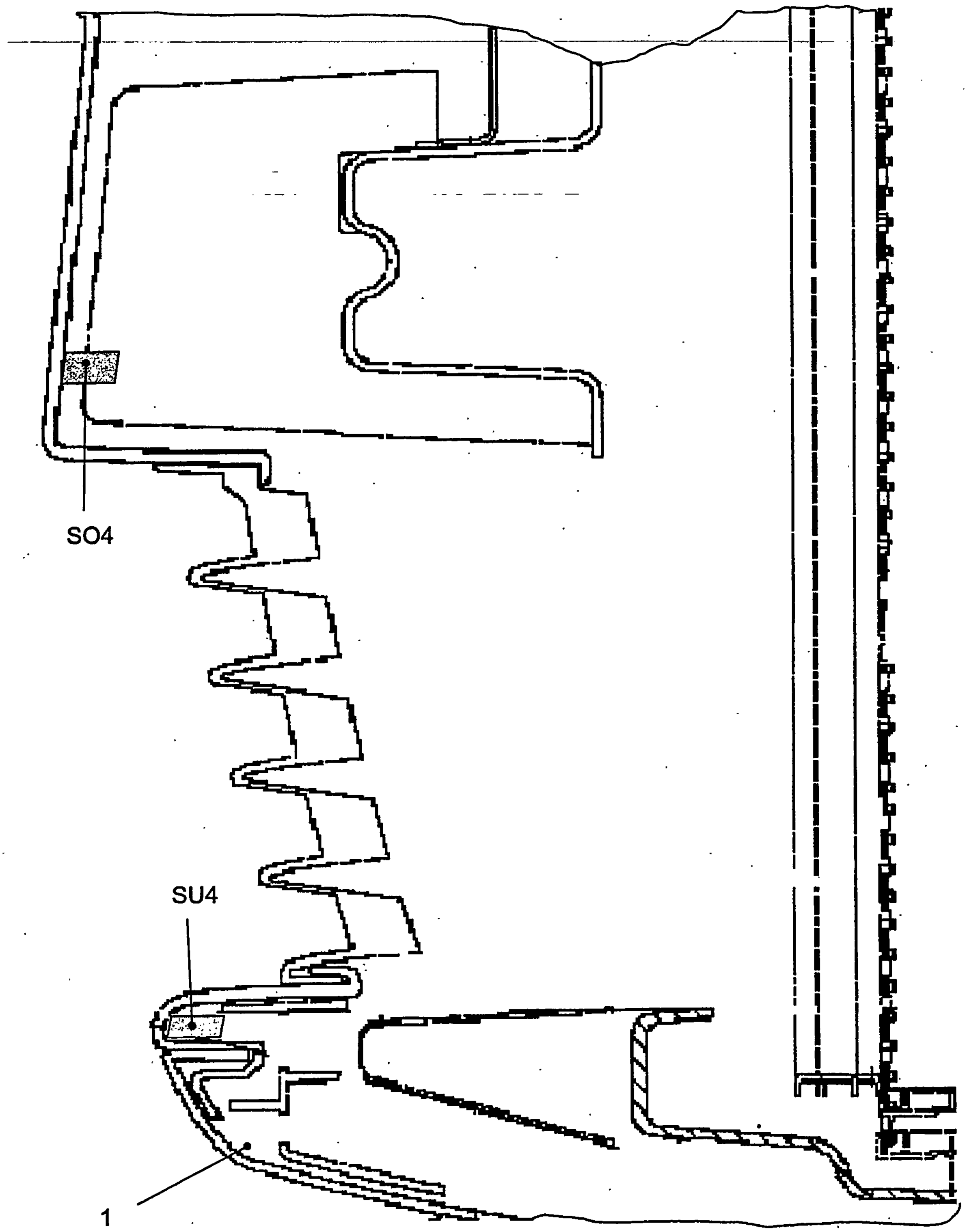


Fig. 2

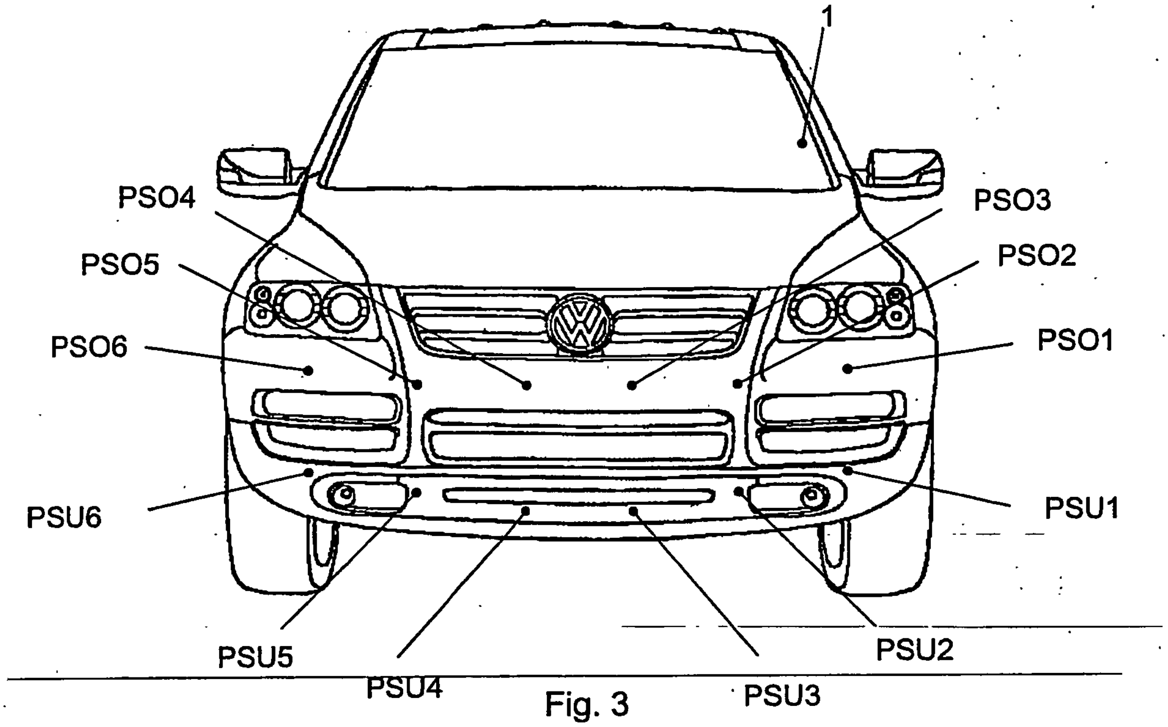
1
PSO4
PSO3
PSO5
PSO2
PSO6
PSO1
PSU6
PSU1
PSU5
PSU2
PSU4
PSU3

Fig. 3

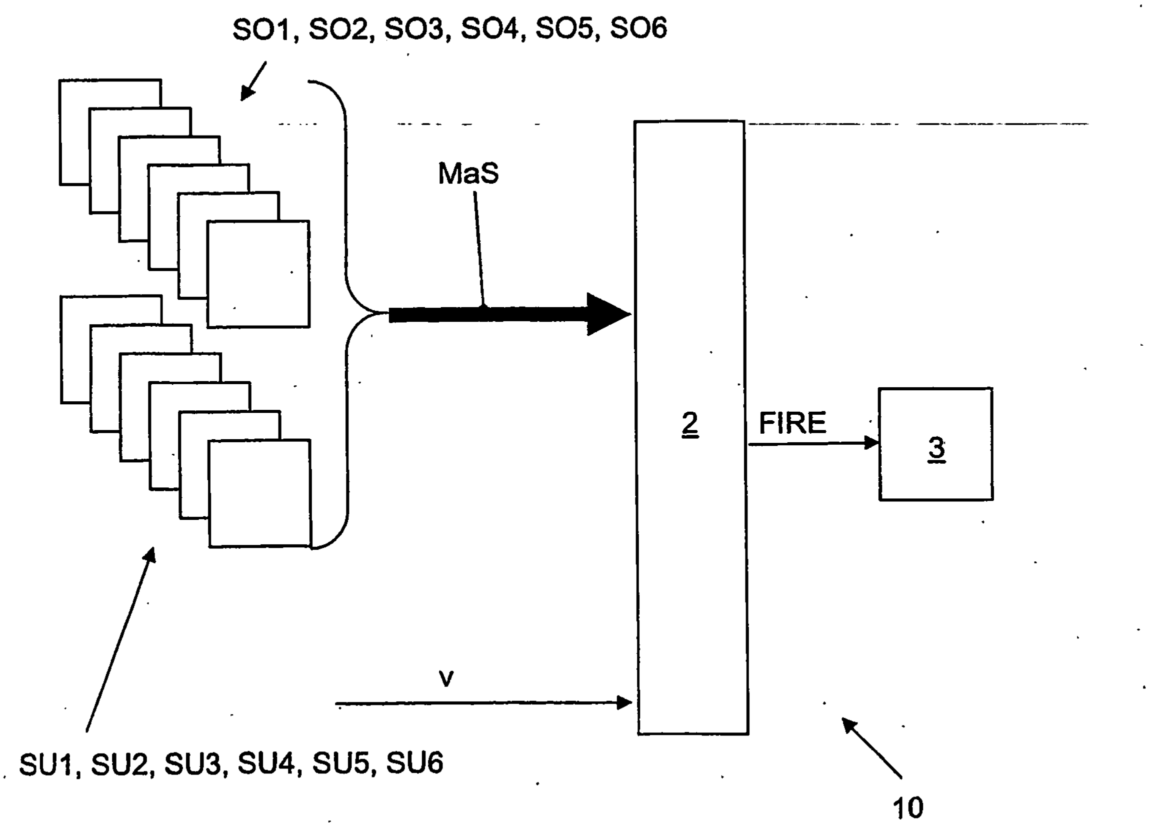
SO1, SO2, SO3, SO4, SO5, SO6
MaS
2
FIRE
3
v
SU1, SU2, SU3, SU4, SU5, SU6
10

Fig. 4

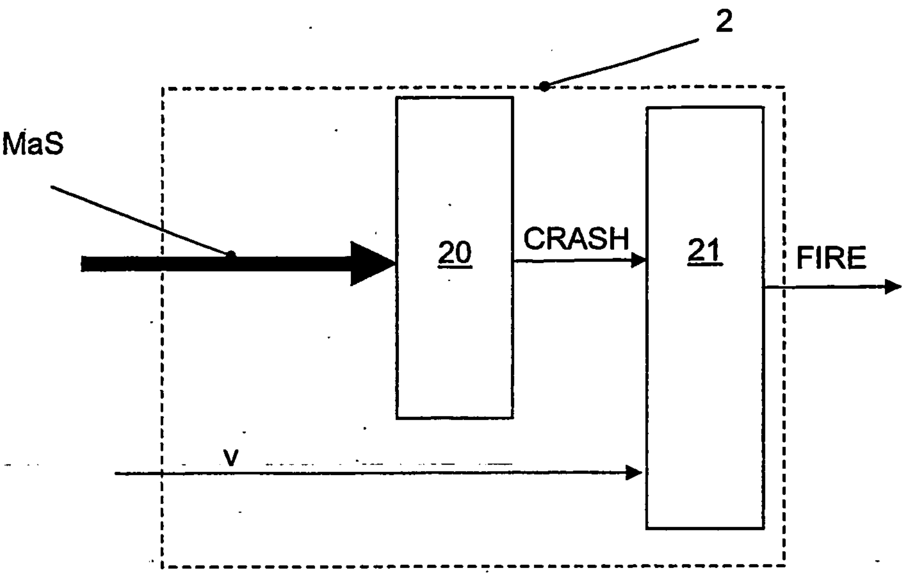


Fig. 5

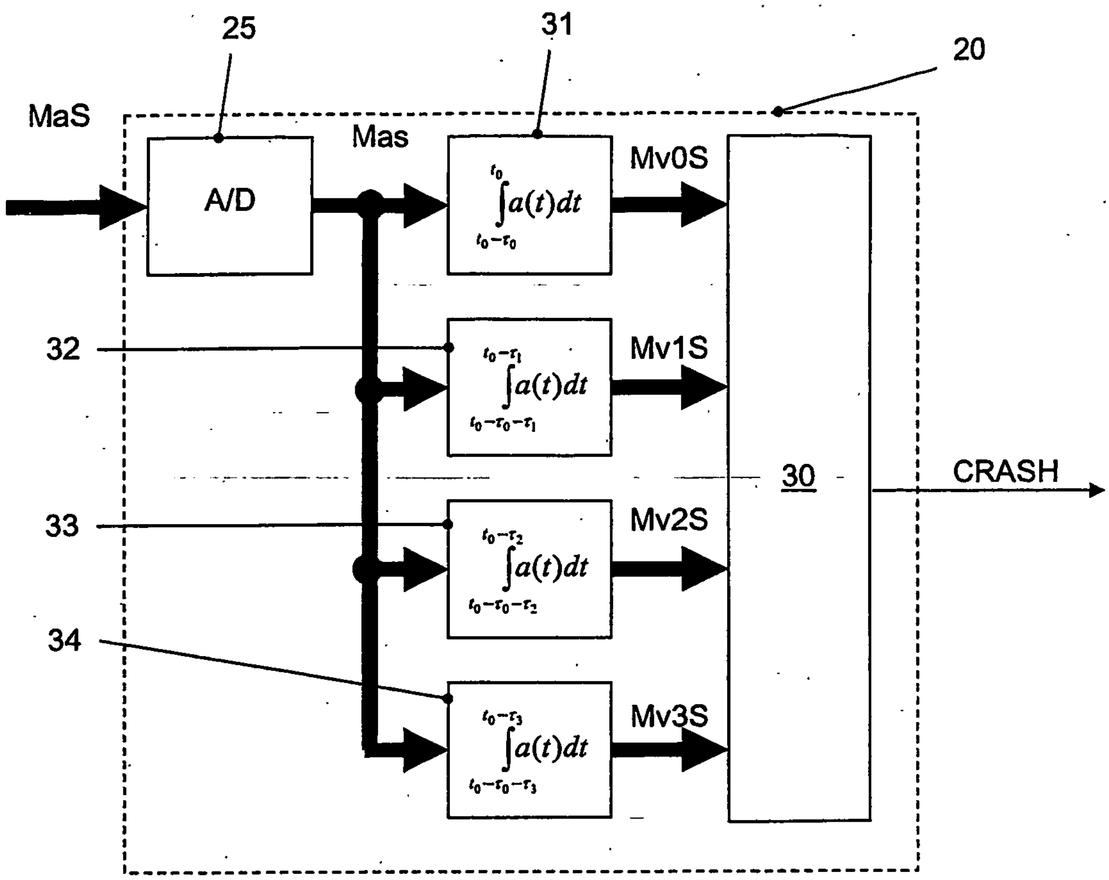


Fig. 6

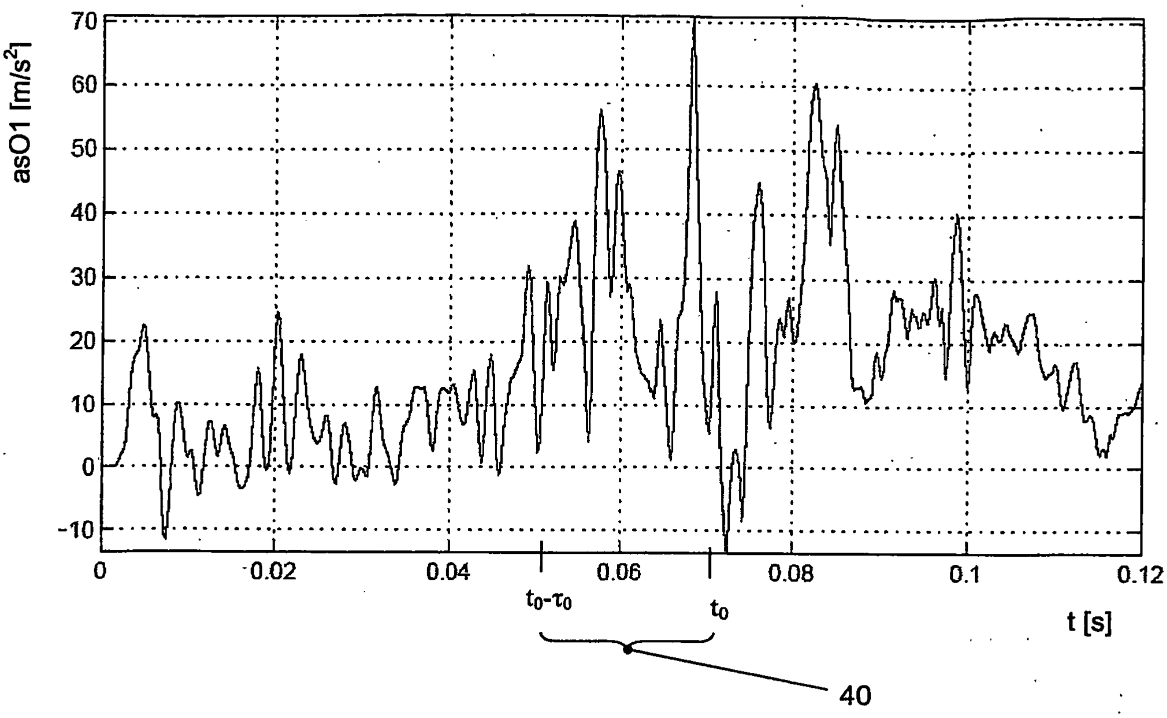

asO1 [m/s²]
70
60
50
40
30
20
10
0
-10
0
0.02
0.04
0.06
0.08
0.1
0.12
t0-τ0
t0
t [s]
40


Fig. 7

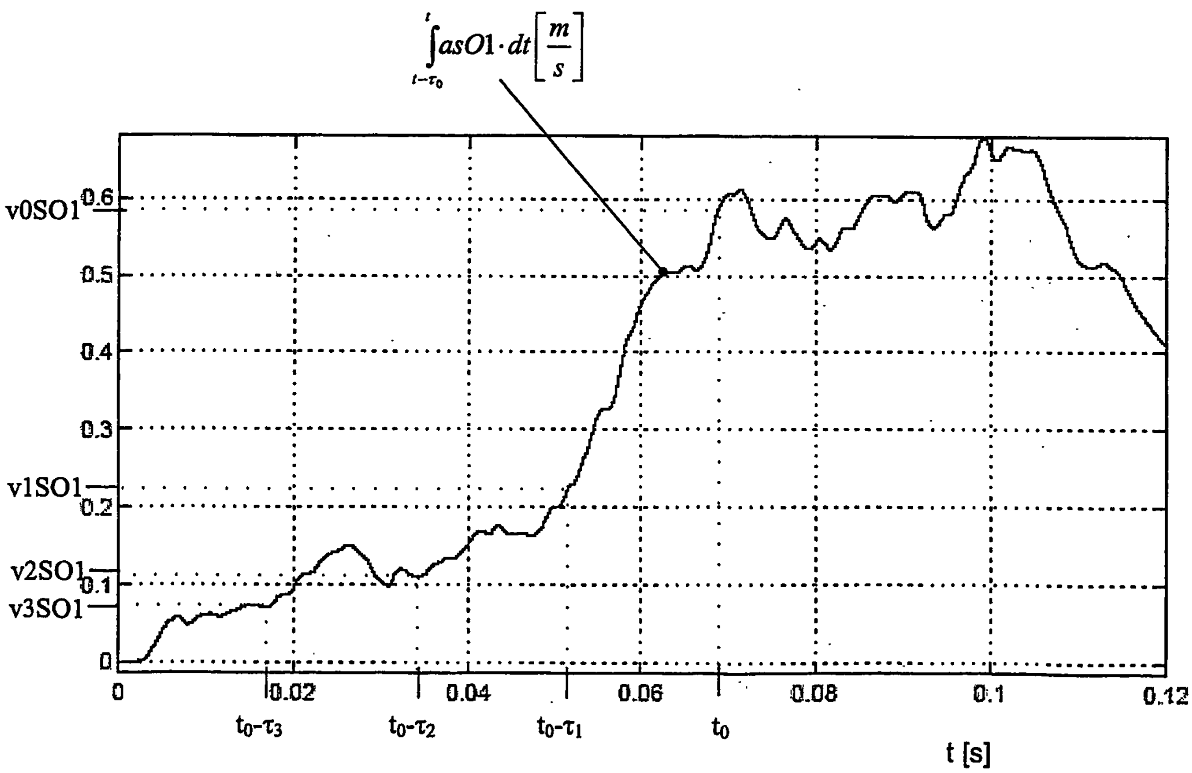

$\int_{t-\tau_0}^{t} asO1 \cdot dt \left[\frac{m}{s}\right]$
v0SO1
v1SO1
v2SO1
v3SO1
0.6
0.5
0.4
0.3
0.2
0.1
0
0
0.02
0.04
0.06
0.08
0.1
0.12
t0-τ3
t0-τ2
t0-τ1
t0
t [s]


Fig. 8

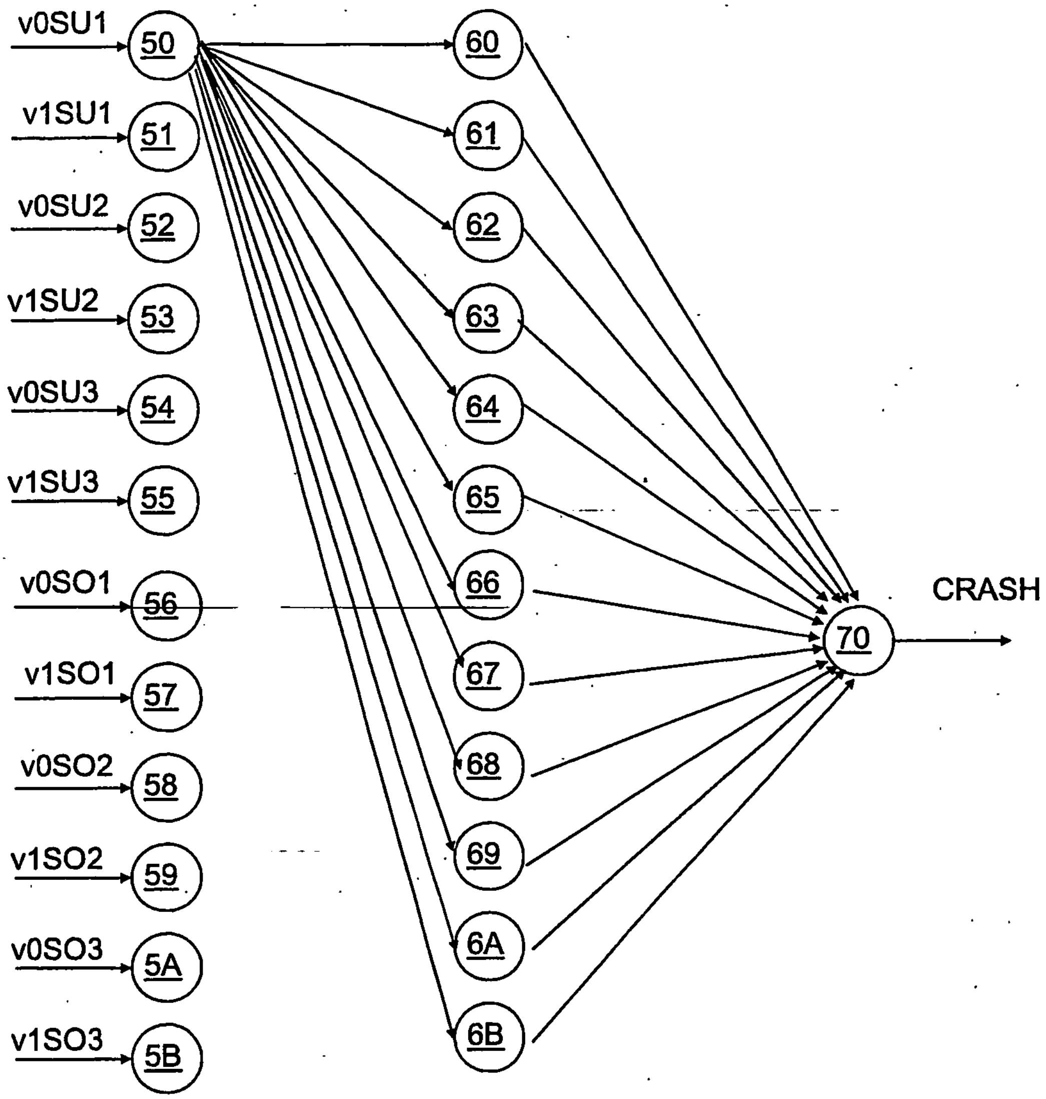
v0SU1
v1SU1
v0SU2
v1SU2
v0SU3
v1SU3
v0SO1
v1SO1
v0SO2
v1SO2
v0SO3
v1SO3
50
51
52
53
54
55
56
57
58
59
5A
5B
60
61
62
63
64
65
66
67
68
69
6A
6B
70
CRASH

Fig. 9

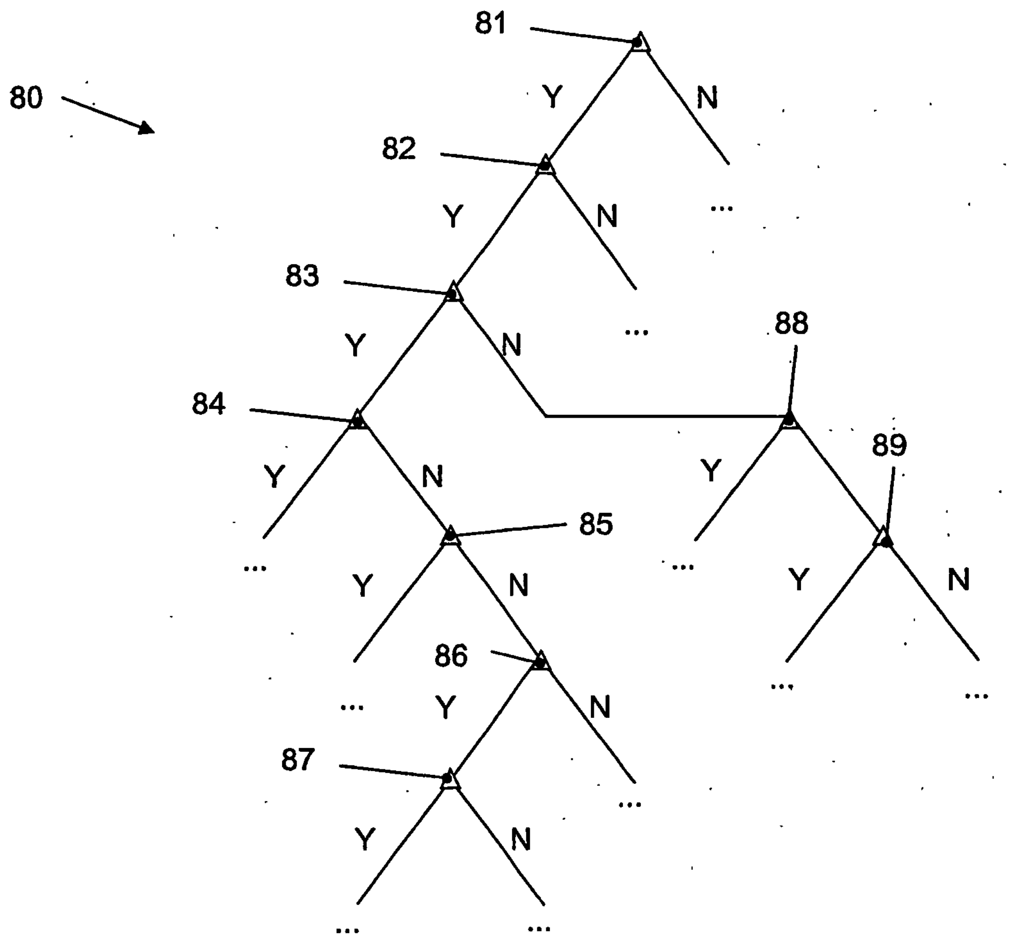


Fig. 10

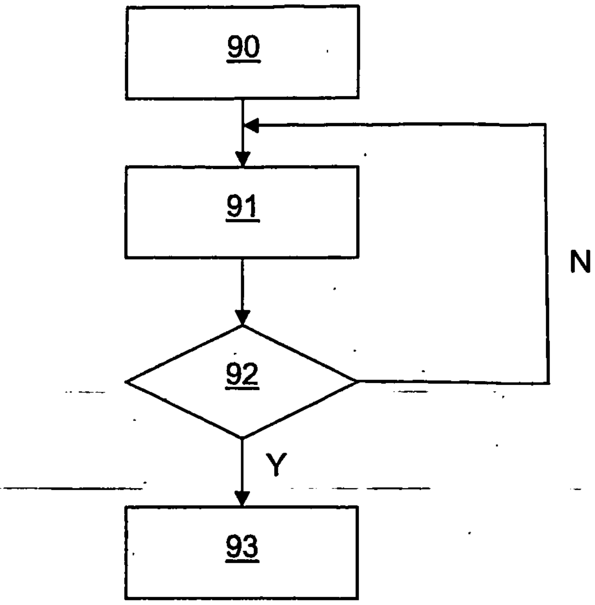


Fig. 11

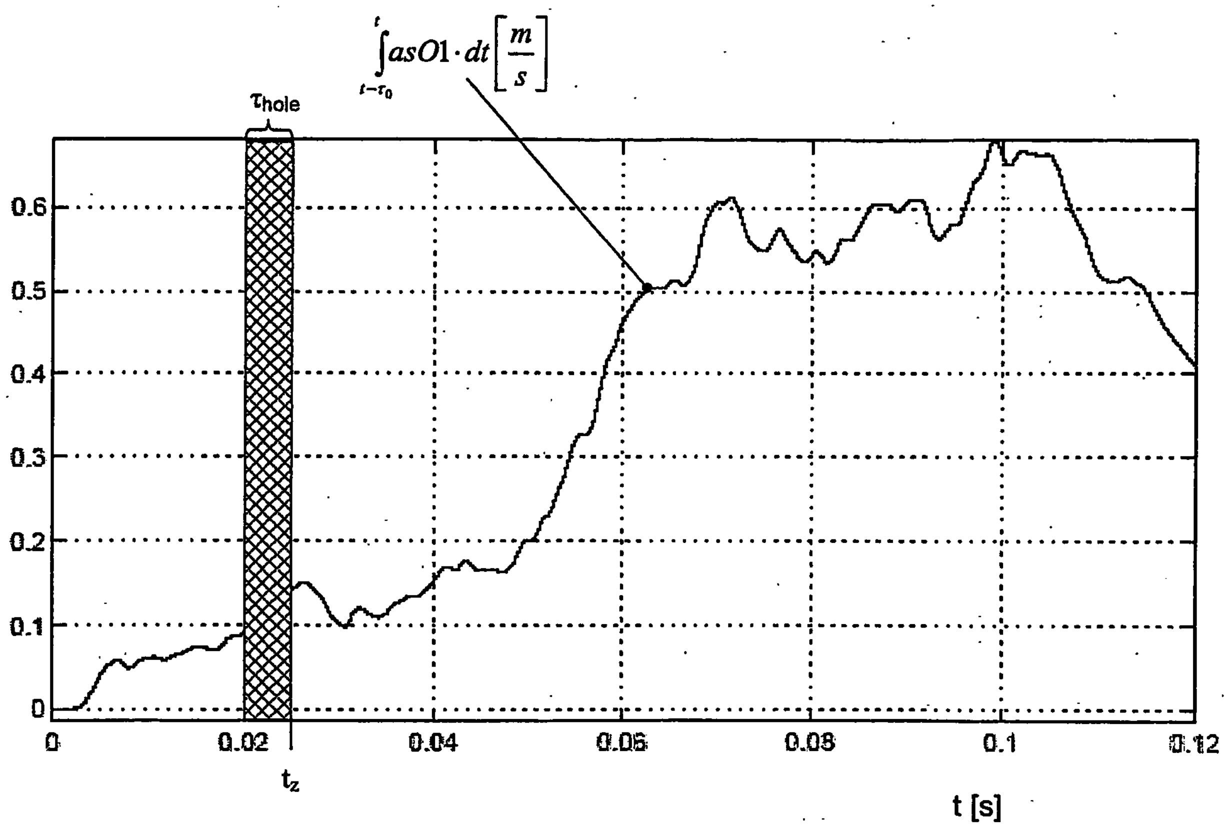
$\int_{t-\tau_0}^{t} asO1 \cdot dt \left[\frac{m}{s}\right]$
$\tau_{hole}$
0.6
0.5
0.4
0.3
0.2
0.1
0
0
0.02
0.04
0.06
0.08
0.1
0.12
$t_z$
t [s]

Fig. 12

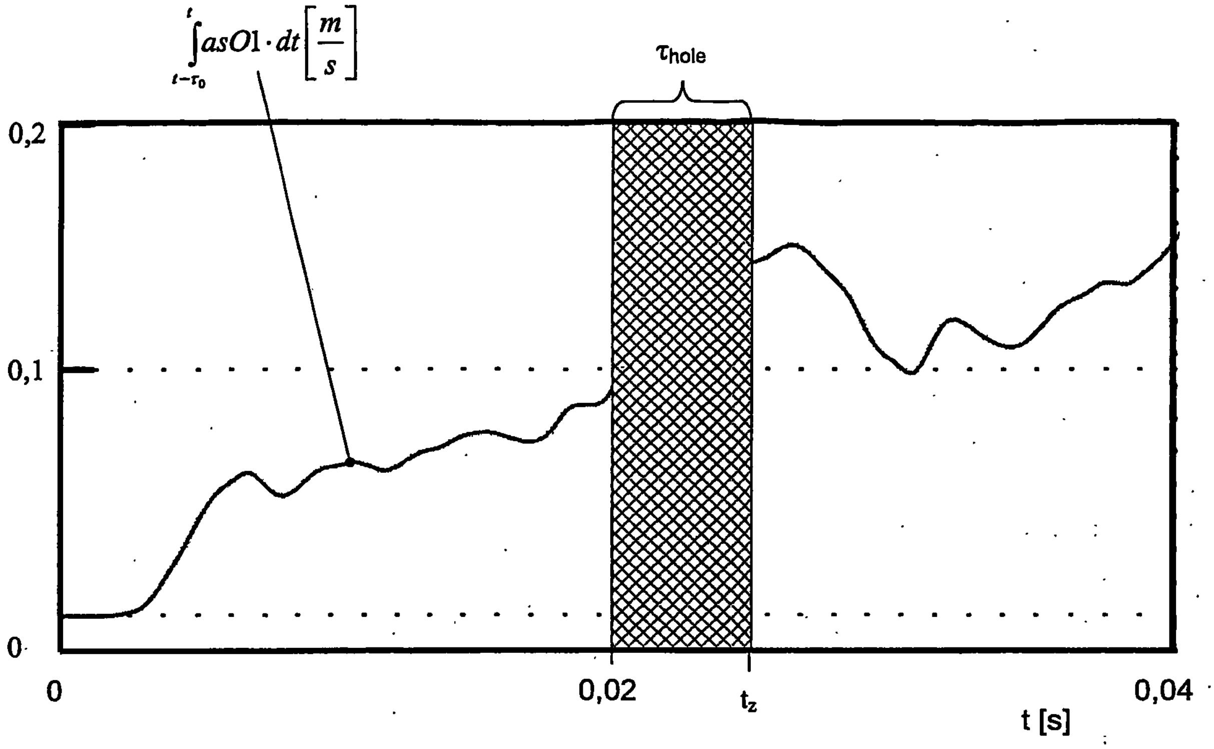

$\int_{t-\tau_0}^{t} asO1 \cdot dt \left[\frac{m}{s}\right]$
τhole
0,2
0,1
0
0
0,02
$t_z$
0,04
t [s]


Fig. 13

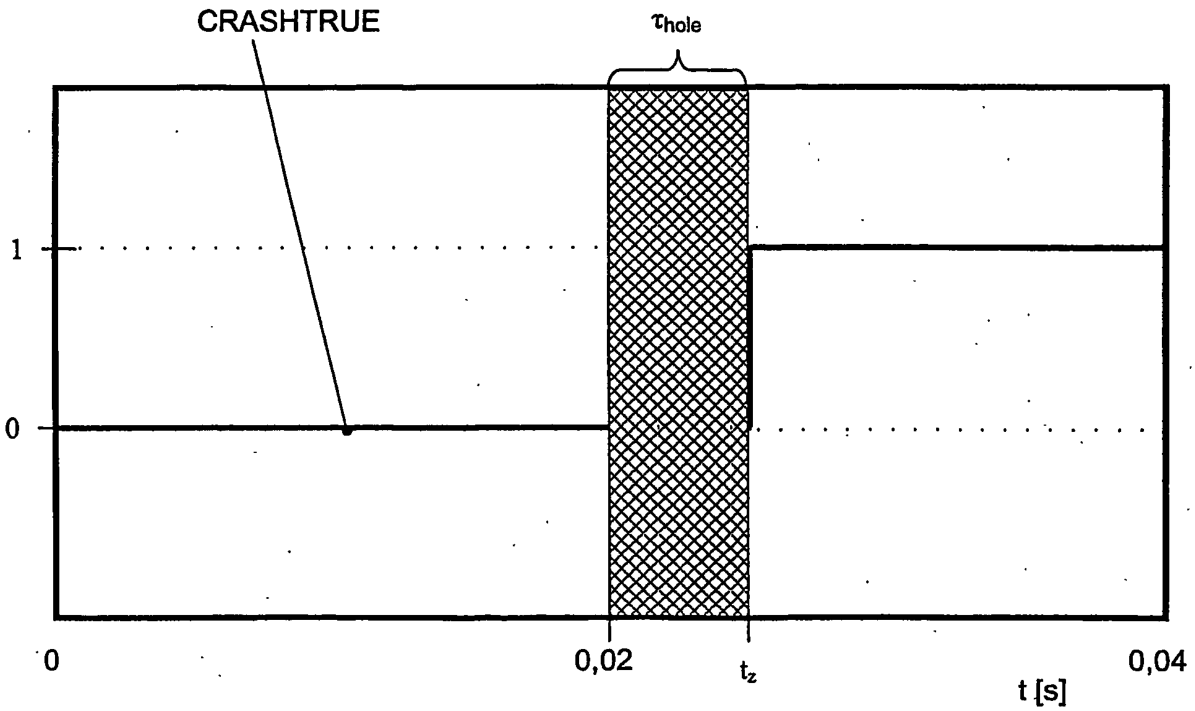

CRASHTRUE
τhole
1
0
0
0,02
$t_z$
0,04
t [s]


Fig. 14

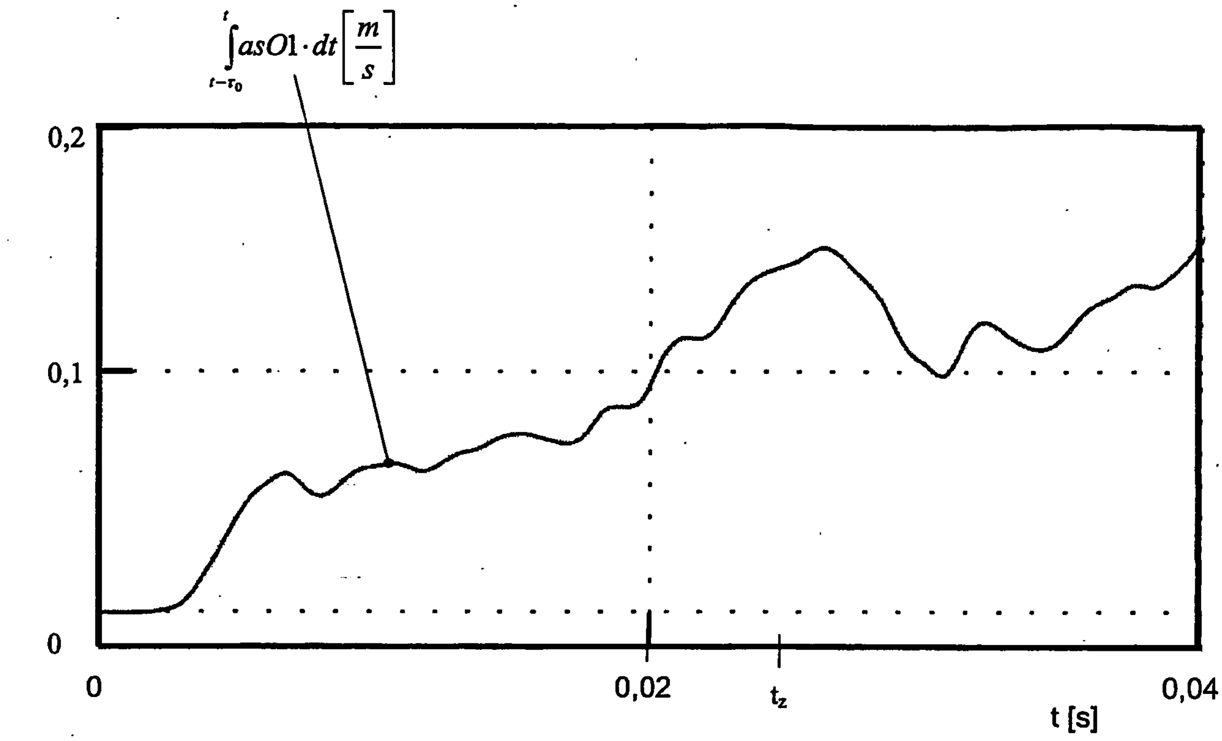
$\int_{t-\tau_0}^{t} asO1 \cdot dt \left[\frac{m}{s}\right]$
0,2
0,1
0
0
0,02
$t_z$
0,04
t [s]

Fig. 15

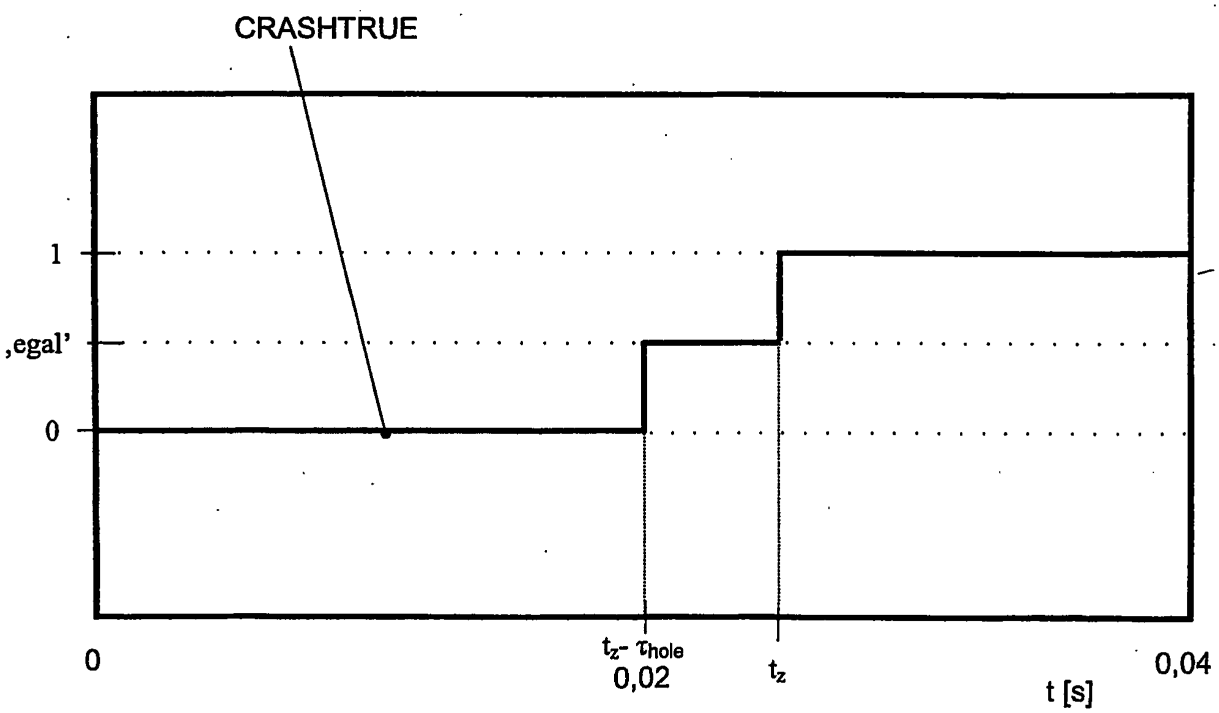
CRASHTRUE
1
‚egal'
0
0
$t_z$- $\tau_{hole}$
0,02
$t_z$
0,04
t [s]

Fig. 16

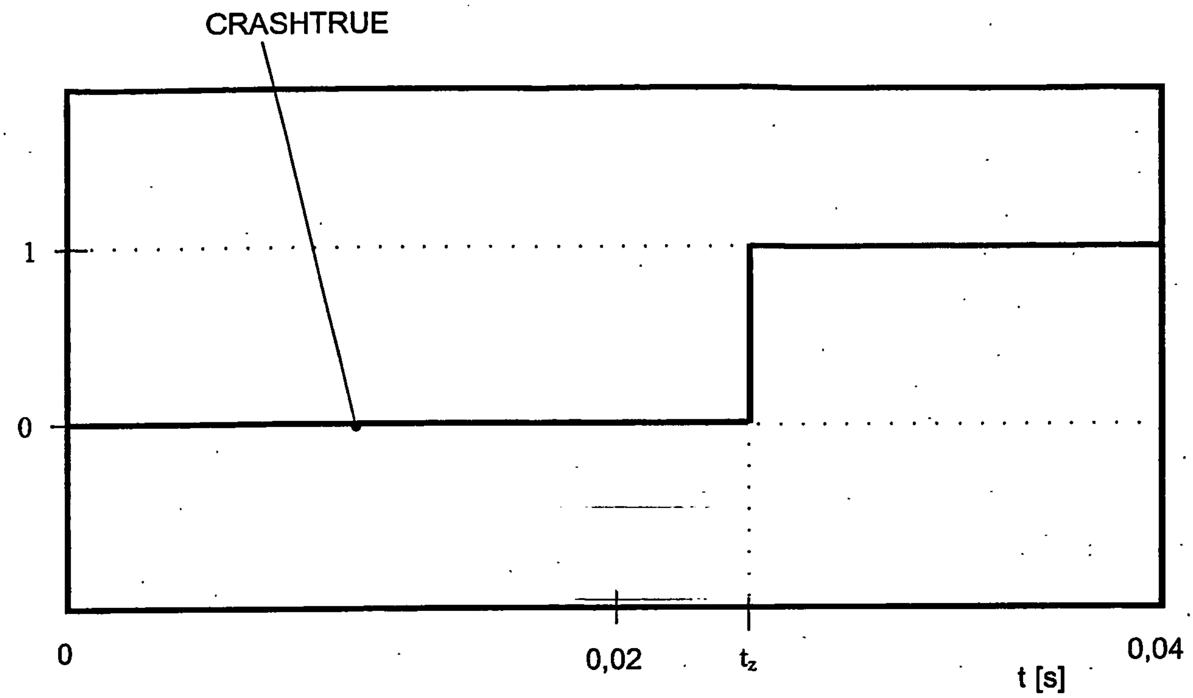
CRASHTRUE
1
0
0
0,02
$t_z$
0,04
t [s]

Fig. 17

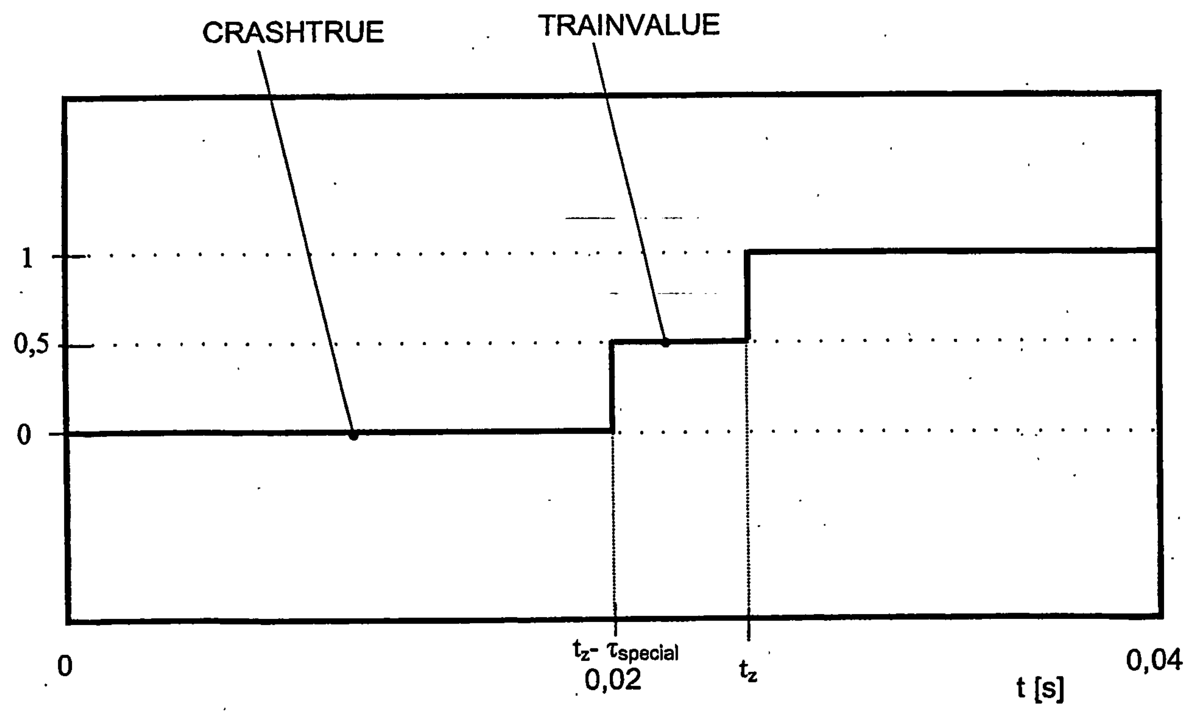
CRASHTRUE
TRAINVALUE
1
0,5
0
0
$t_z$- $\tau_{special}$
0,02
$t_z$
0,04
t [s]

Fig. 18

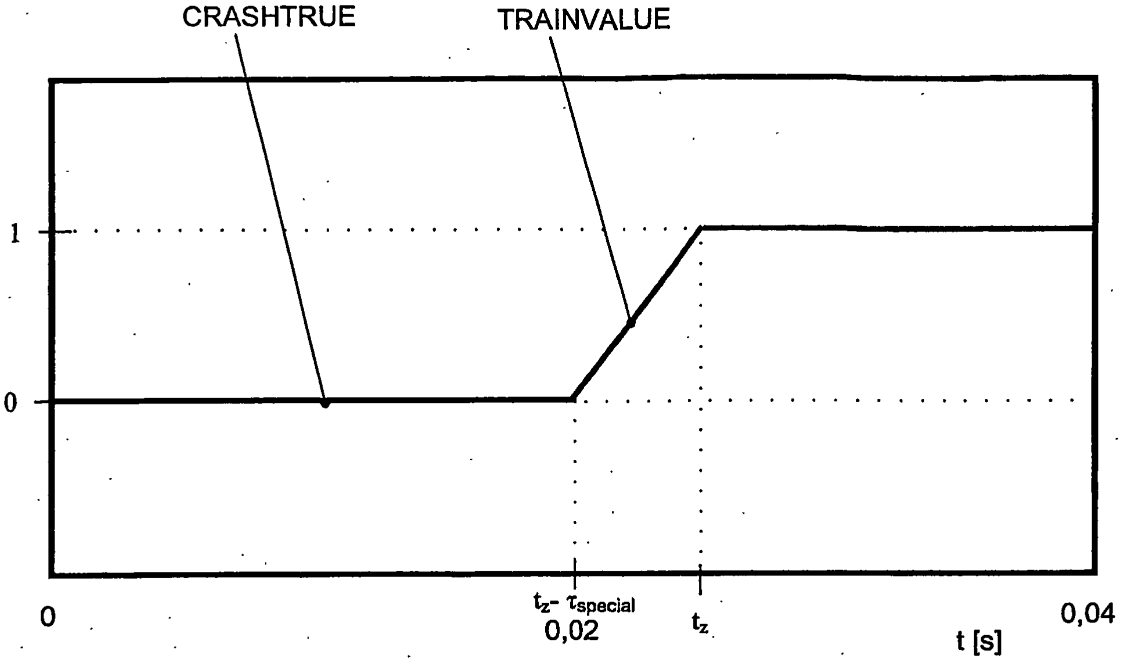
CRASHTRUE
TRAINVALUE
1
0
0
$t_z$- $\tau_{special}$
0,02
$t_z$
0,04
t [s]

Fig. 19

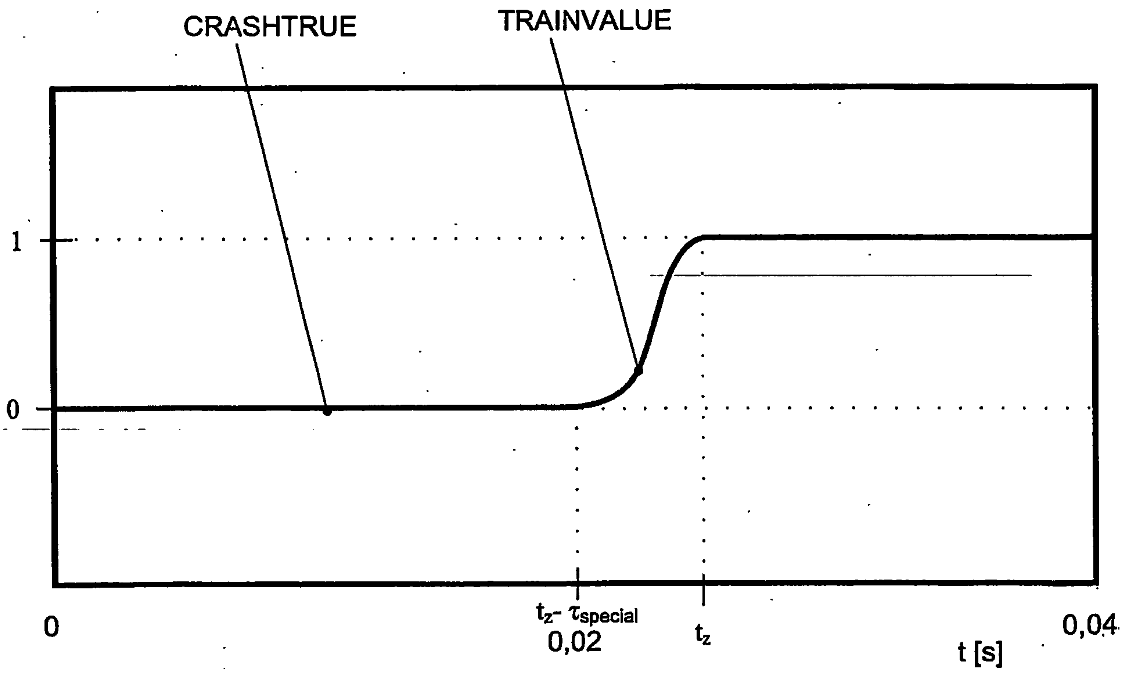
CRASHTRUE
TRAINVALUE
1
0
0
$t_z$- $\tau_{special}$
0,02
$t_z$
0,04
t [s]

Fig. 20

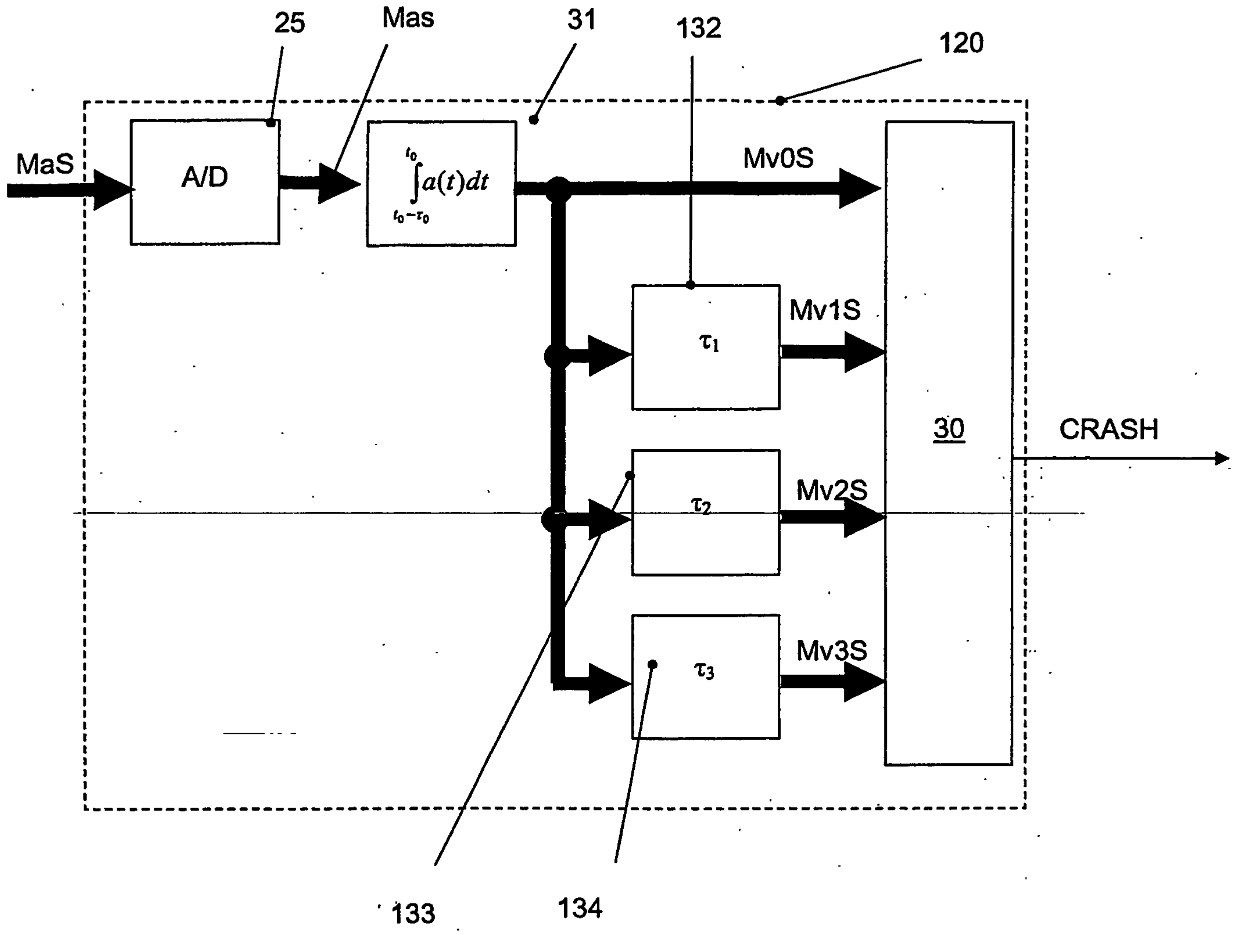
25
Mas
31
132
120
MaS
A/D
$\int_{t_0-\tau_0}^{t_0} a(t)dt$
Mv0S
Mv1S
$\tau_1$
30
CRASH
$\tau_2$
Mv2S
$\tau_3$
Mv3S
133
134

Fig. 21

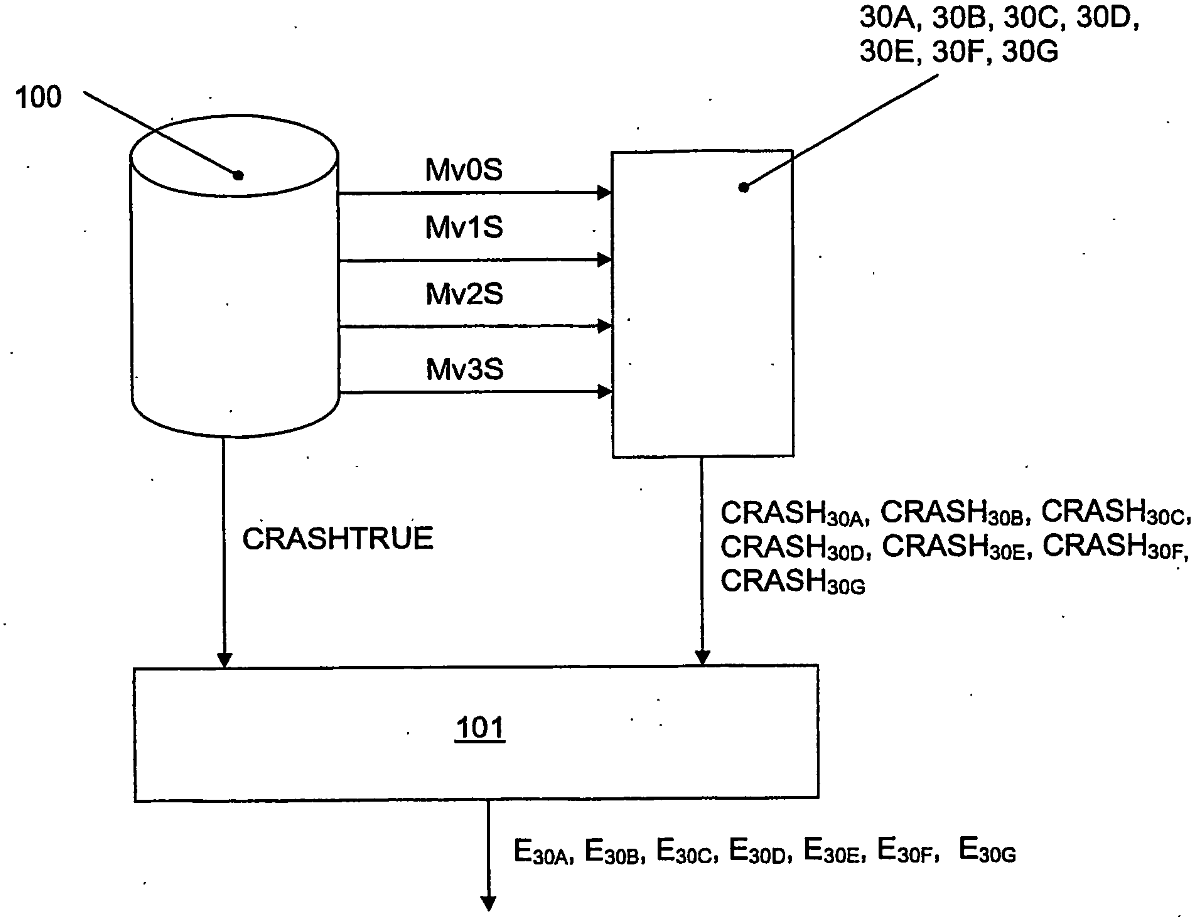
30A, 30B, 30C, 30D,
30E, 30F, 30G
100
Mv0S
Mv1S
Mv2S
Mv3S
CRASHTRUE
CRASH30A, CRASH30B, CRASH30C,
CRASH30D, CRASH30E, CRASH30F,
CRASH30G
101
E30A, E30B, E30C, E30D, E30E, E30F, E30G

Fig. 22

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0914992 A1
- DE 10016142 A1
- US 200243417 A
- US 5684701 A


### In der Beschreibung aufgeführte Nicht-Patentliteratur


- **Taylor, M. ; Lisboa.** *Techniques And Application Of Neural Networks,* 1993
- **Caudill, M. ; Butler, G.** Naturally Intelligent Systems. MIT Press, 1990
- **Kung, S. Y.** Digital Neural Networks. PTR Prentice Hall, 1993